# EUROPEAN PATENT APPLICATION

(11) **EP 4 470 768 A1**
(43) Date of publication of application: **04.12.2024**
(21) Application number: 23746948.1
(22) Date of filing: 24.01.2023
(51) Int. Cl.: B32B 9/00, C01G 41/00, C01G 41/02, C09K 3/00

(54) **NEAR-INFRARED ABSORBING PARTICLES, METHOD FOR PRODUCING NEAR-INFRARED ABSORBING PARTICLES, NEAR-INFRARED ABSORBING PARTICLE DISPERSION LIQUID, NEAR-INFRARED ABSORBING PARTICLE DISPERSION, NEAR-INFRARED ABSORBING MULTILAYER BODY AND NEAR-INFRARED ABSORBING TRANSPARENT BASE MATERIAL**

(30) Priority: 26.01.2022 JP 2022010415
(71) Applicant: SUMITOMO METAL MINING CO., LTD., Tokyo 105-8716 (JP)
(72) Inventor: ADACHI, Kenji, Ichikawa-shi, Chiba 272-8588 (JP); WAKABAYASHI, Masao, Ichikawa-shi, Chiba 272-8588 (JP)
(74) Representative: Jones, Nicholas Andrew
(86) International application number: PCT/JP2023/002130
(87) International publication number: WO 2023/145737

(57) **Abstract**

Near-infrared absorbing particles include intergrowth tungsten bronze crystals in which tungsten oxide and hexagonal tungsten bronze coexist in a band pattern. A Cs/W ratio by mole of cesium (Cs) and tungsten (W) contained in the near-infrared absorbing particles is 0.01 or more and less than 0.20. An O/W ratio by mole of oxygen (O) and tungsten (W) contained in the near-infrared absorbing particles is 2.6 or more and less than 2.99.

## Description

### TECHNICAL FIELD

The present invention relates to near-infrared absorbing particles, production methods for near-infrared absorbing particles, near-infrared absorbing particle dispersion liquids, near-infrared absorbing particle dispersions, near-infrared absorbing stacks, and near-infrared absorbing transparent bases.

### BACKGROUND ART

Near-infrared rays contained in sunlight transmit through window materials and the like to enter the room, and increase the surface temperatures of the walls and floors of the room and hence the room temperature. Therefore, in order to ensure comfortability of an indoor thermal environment, the increase in the room temperature is suppressed, for example, by applying light-shielding members to the window materials and the like, thereby blocking entry of near-infrared rays through windows.

A light-shielding member used for window materials and the like is proposed in Patent Document 1. The proposed light-shielding member is a light-shielding film including a base film and a light-shielding layer on at least one surface of the base film. In this light-shielding film, the light-shielding layer includes a binder resin, black powder having an average particle diameter of 1 µm or less, an organic filler having an average particle diameter of from 0.5 µm through 10 µm, and a lubricant having an average particle diameter of from 0.1 µm through 10 µm, and the binder resin is a thermoplastic resin having a Tg of 40°C or higher and a softening point of 80°C or higher. As the black powder, inorganic pigments, such as carbon black, titanium black, and the like, and organic pigments, such as aniline black and the like, are exemplified.

Patent Document 2 discloses a heat-retaining sheet that is formed as knitted fabric. This knitted fabric is formed of a belt-like film with infrared reflectivity and a belt-like film with infrared absorptivity each serving as warps or wefts. This document also describes that the belt-like film with infrared reflectivity is a stack of: a synthetic resin film subjected to vapor deposition of aluminum; and an additional synthetic resin film.

In Patent Document 3, the present applicant proposes fine particle dispersion of infrared-shielding material, which is formed by dispersing fine particles of the infrared-shielding material in a medium. This fine particle dispersion of infrared-shielding material contains tungsten oxide fine particles and/or complex tungsten oxide fine particles. The dispersed particles' diameters of the fine particles of the infrared-shielding material are 1 nm or more and 800 nm or less.

### RELATED ART DOCUMENTS

### PATENT DOCUMENTS

Patent Document 1: Japanese Unexamined Patent Application Publication No. 2003-029314
Patent Document 2: Japanese Unexamined Patent Application Publication No. 1997-107815
Patent Document 3: International Publication No. WO2005/037932

### NON-PATENT DOCUMENTS

Non-Patent Document 1: A. Hussain, "Phase analyses of potassium, rubidium and cesium tungsten bronzes", Acta Chem. Scand., A32, 479 (1978)
Non-Patent Document 2: K. Machida, M. Okada, K. Adachi, "Excitations of free and localized electrons at nearby energies in reduced cesium tungsten bronze nanocrystals", J. Appl. Phys. Vol. 125, 103103 (2019)

### SUMMARY OF THE INVENTION

### PROBLEMS TO BE SOLVED BY THE INVENTION

Near-infrared shielding materials are used in various applications and forms, and new near-infrared absorbing particles are required.

In view of the above issues in the art, it is an object of one aspect of the present invention to provide new near-infrared absorbing particles.

### MEANS FOR SOLVING THE PROBLEMS

In one aspect, the present invention provides near-infrared absorbing particles including intergrowth tungsten bronze crystals in which tungsten oxide and hexagonal tungsten bronze coexist in a band pattern. A Cs/W ratio by mole of cesium (Cs) and tungsten (W) contained in the near-infrared absorbing particles is 0.01 or more and less than 0.20. An O/W ratio by mole of oxygen (O) and tungsten (W) contained in the near-infrared absorbing particles is 2.6 or more and less than 2.99.

### ADVANTAGEOUS EFFECTS OF THE INVENTION

In one aspect, the present invention can provide new near-infrared absorbing particles.

### BRIEF DESCRIPTION OF THE DRAWINGS

[FIG. 1] FIG. 1 is a schematic diagram of a near-infrared absorbing particle dispersion liquid.
[FIG. 2] FIG. 2 is a schematic diagram of a near-infrared absorbing particle dispersion.
[FIG. 3] FIG. 3 is a schematic diagram of a near-infrared absorbing stack.
[FIG. 4] FIG. 4 is a schematic diagram of a near-infrared absorbing transparent base.
[FIG. 5] FIG. 5 is of X-ray powder diffraction patterns of powders A to F obtained in Examples 1 to 6.
[FIG. 6] FIG. 6 is a HAADF image of STEM of powder I obtained in Example 9.
[FIG. 7A] FIG. 7A is an SEM image of powder I obtained in Example 9.
[FIG. 7B] FIG. 7B is a selected area electron diffraction image of powder I obtained in Example 9.
[FIG. 8A] FIG. 8A is a pattern obtained through fast Fourier transform of an atomic image of region A of FIG. 6.
[FIG. 8B] FIG. 8B is a pattern obtained through fast Fourier transform of an atomic image of region B of FIG. 6.
[FIG. 8C] FIG. 8C is a pattern obtained through fast Fourier transform of an atomic image of a wide region extending over regions A and B of FIG. 6.
[FIG. 9] FIG. 9 is of transmission profiles of dispersion liquids obtained in Example 1, Comparative Example 1, and Example 4.
[FIG. 10] FIG. 10 is of transmission profiles of dispersion liquids obtained in Example 2, Comparative Example 2, and Example 5.
[FIG. 11] FIG. 11 is of transmission profiles of dispersion liquids obtained in Example 3, Comparative Example 3, and Example 6.
[FIG. 12] FIG. 12 is of transmission profiles of dispersion liquids obtained in Examples 7 to 9.
[FIG. 13] FIG. 13 is of transmission profiles of dispersion liquids obtained in Comparative Example 4 and Example 10.

### DETAILED DESCRIPTION OF THE INVENTION

Hereinafter, embodiments of the present invention will be described with reference to the drawings. The present invention is not limited to the following embodiments, and various modifications and substitutions may be added to the following embodiments without departing from the scope of the present invention.

### [Near-infrared absorbing particles and production method for the near-infrared absorbing particles]

The near-infrared absorbing particles according to the present embodiment and the production method for the near-infrared absorbing particles will be described below.

### (1) Near-infrared absorbing particles

### (Composition and crystal structure of the near-infrared absorbing particles)

In the near-infrared absorbing particles according to the present embodiment, the Cs/W ratio by mole of cesium (Cs) and tungsten (W) can be 0.01 or more and less than 0.20, and the O/W ratio by mole of oxygen (O) and tungsten (W) can be 2.6 or more and less than 2.99. The near-infrared absorbing particles according to the present embodiment can include the intergrowth tungsten bronze crystals in which tungsten oxide and hexagonal tungsten bronze coexist in a band pattern. Although the near-infrared absorbing particles according to the present embodiment may be composed of the intergrowth tungsten bronze crystals, inclusion of unavoidable impurities in the production process or the like is not eliminated even in this case.

Hexagonal tungsten bronze (hereinafter the hexagonal tungsten bronze is also referred to as "HTB", the hexagonal tungsten bronze containing cesium is also referred to as "Cs-HTB", and a hexagonal tungsten bronze structure is also referred to as "HTB structure") is well known as particles that are an oxide containing Cs and W and absorb near-infrared rays. Conventionally, the composition of the above oxide that is used for the near-infrared absorbing particles and has the HTB structure is that the Cs/W ratio is 0.20 or more and 0.33 or less. Therefore, in the conventional Cs-HTB material, the composition in which the Cs/W ratio is less than 0.20 did not attract attention.

When the Cs/W ratio is from 0 through 0.20, it is known that two-phase separation into WO₃ and Cs_{0.2}WO₃ occurs according to Hussain's phase diagram (Non-Patent Document 1). This is called an intergrowth tungsten bronze crystal (hereinafter also referred to as "ITB"). More specifically, the structure of the ITB is a band-patterned structure in which WO₃ layers and Cs_{0.2}WO₃ layers exist alternately. It has been generally believed that near-infrared absorption does not occur or is very weak in this ITB. Thus, superiority of the ITB in practical use is believed to be absent, and as a result no studies are made about optical characteristics of the particles having a compositional range forming the ITB structure (hereinafter also referred to as "ITB compositional range"), i.e., a compositional range in which the Cs/W ratio is less than 0.2.

However, the present inventors studied tungsten bronze particles having this ITB compositional range, and found that the tungsten bronze particles have unique absorption properties. Specifically, by heating and crystallizing cesium and tungsten-containing raw materials in a reducing atmosphere in the ITB compositional range similar to production of the Cs-HTB particles, the obtained product could be confirmed to have visible light transmission and near-infrared absorption properties comparable to the Cs-HTB particles outside the ITB compositional range.

Therefore, the near-infrared absorbing particles of the present embodiment, which are the new near-infrared absorbing particles found by the present inventors, can contain the intergrowth tungsten bronze crystals in which tungsten oxide and hexagonal tungsten bronze coexist in a band pattern, as described above. By inclusion of the intergrowth tungsten bronze crystals, the Cs/W ratio by mole of contained cesium (Cs) and contained tungsten (W) can be 0.01 or more and less than 0.20.

A part of the cesium contained in the hexagonal tungsten bronze in the near-infrared absorbing particles of the present embodiment may be substituted with an additive element. The additive element is, for example, one or more selected from Na, Tl, In, Li, Be, Mg, Ca, Sr, Ba, Al, and Ga. When the part of the cesium is substituted with an additive element M, the above Cs/W ratio becomes a (Cs+M)/W ratio, and the range thereof can be set to the above range.

The tungsten oxide may be, for example, tungsten trioxide (WO₃).

The ITB contained in the near-infrared absorbing particles obtained in the above-described manner is basically phase-separated into tungsten oxide and Cs-HTB. The tungsten oxide and the Cs-HTB are both reduced to substantially form WO_{3-y1} and CsₓWO_{3-y2}. The properties of WO_{3-y1}, which has a particularly strong blue color, are strongly reflected, resulting in the ITB having a strong blue color as a whole. Here, y1 and y2 of WO_{3-y1} and CsₓWO_{3-y2} may be different values, where y1 is a given value in the range of 0≤y1≤0.30 and y2 is a given value in the range of -0.1≤y2≤0.46. However, the O/W ratio by mole in the near-infrared absorbing particles is 2.6 or more and less than 2.99.

The near-infrared absorbing particles containing the ITB can be obtained by subjecting a raw material mixture, containing a cesium-containing compound and a tungsten-containing compound, to a reducing crystallization stage of heating and crystallizing the raw material mixture in an atmosphere of a reducing gas. In the reducing crystallization stage, the raw material mixture is heated in a reducing atmosphere preferably at a temperature of 350°C or higher and 950°C or lower and more preferably at a temperature of 450°C or higher and 650°C or lower.

The target near-infrared absorbing particles can be obtained by heating the raw material mixture once in the reducing atmosphere in the reducing crystallization stage. However, the obtained near-infrared absorbing particles may be further annealed in a neutral atmosphere (annealing stage). By performing annealing, the crystals can be further stabilized. The neutral atmosphere for annealing is an inert atmosphere, such as an Ar atmosphere or a N₂ atmosphere, and the annealing temperature is desirably 350°C or higher and 950°C or lower.

In the above heating and crystallization in the reducing atmosphere, not only hexagonal Cs_{0.20}WO₃ but also orthorhombic Cs₄W₁₁O₃₅, trigonal Cs₆W₁₁O₃₆, cubic CsW_{1.6}O₆, and the like are often formed as a mixture. This is because of fluctuation in the Cs composition in the sample. All of these crystal phases are formed so as to accommodate Cs having a large ionic radius within the hexagonal cavity of hexagonal WO₃. Cs_{0.20}WO₃ is formed by regularly inserting Cs-rich planes into the basal plane. In addition, Cs₆W₁₁O₃₆ and CsW_{1.6}O₆ are formed by further inserting Cs-rich planes into the basal plane, and Cs₄W₁₁O₃₅ is formed by further inserting Cs-rich planes into the prism plane.

The WO₃ component, which is the other phase after the phase separation, is partially reduced at the oxygens to WO_{3-y1}, where y1 takes various values in the range of 0≤y1≤0.30.

When the near-infrared absorbing particles containing the ITB in such a non-equilibrium state are annealed at the above annealing stage, these crystal phases are arranged into more stable crystal phases, and ultimately, Cs_{0.20}WO_{3-y2} and WO_{3-y1} are formed. However, the optical characteristics do not change so much regardless of whether or not the crystal phases are arranged into equilibrium phases.

Here, WO_{3-y1} where y1 exceeds 0.10 becomes a typical Magneli phase and comes to have conductivity, and thus exhibits near-infrared absorptivity. However, the visible light transmission of the Magneli phase particles causes strong coloring in blue, and the ITB and the ITB-containing near-infrared absorbing particles are also strongly colored in blue.

Therefore, in order to adjust the color of the near-infrared absorbing particles of the present embodiment, the reducing crystallization stage can be followed by an additional oxidation stage of further performing a heat treatment in an atmosphere of an oxidizing or weakly reducing gas.

In the oxidation stage, the powder obtained in the reducing crystallization stage may be heated in an oxidizing or weakly reducing atmosphere. No particular limitation is imposed on the heating temperature at this time, which may be, for example, 300°C or higher and 550°C or lower.

In the oxidation stage, WO_{3-y1} may be oxidized to WO₃ while maintaining Cs-HTB. That is, in the oxidation stage, the oxidation of WO_{3-y1} proceeds preferentially over that of Cs-HTB. This is because Cs having a large ionic radius in Cs-HTB blocks the hexagonal tunnel and inhibits oxygen diffusion, and thus the oxygen diffusion speed in WO_{3-y1} is much higher than that in Cs-HTB. Incidentally, Cs-HTB and WO_{3-y1} are previously formed, and the oxidation stage can be performed after the reducing crystallization stage when the oxidation stage is performed.

In the ITB contained in the near-infrared absorbing particles of the present embodiment produced in this manner, the greater the proportion of the HTB, i.e., the greater the Cs/W ratio, the greater the near-infrared absorptivity but the stronger the blue color. With x representing the Cs/W ratio by mass of contained cesium (Cs) and contained tungsten (W), the proportion of the HTB is 100% when x=0.2, and the proportion of the HTB is 50% when x=0.1.

The Cs/W ratio of the Cs-HTB phase forming the ITB is 0.20 as an equilibrium phase. However, in many actual cases, the Cs-HTB phase exists in a non-equilibrium state, and varies from about 0.15 through about 0.25 due to fluctuation in the Cs composition of the sample. Cs is incorporated into the hexagonal cavity site of the HTB with Cs/W=0.33 at the maximum. Thus, many hexagonal cavity sites in the Cs-HTB in the ITB become vacant.

The oxidation stage is preferably performed in a low-oxygen-concentration atmosphere having an oxygen concentration of 1% by volume or higher and 10% by volume or lower. The low-oxygen-concentration atmosphere more preferably has an oxygen concentration of 1% by volume or higher and 7% by volume or lower. As the low-oxygen-concentration atmosphere, it is preferable to use a gas mixture of air and an inert gas, such as an Ar gas, a N₂ gas, or the like.

When the oxygen concentration of the low-oxygen-concentration atmosphere is set to 1% by volume or higher, the oxidation of WO_{3-y1} can proceed, and the color of the near-infrared absorbing particles can be readily adjusted. Also, when the oxygen concentration of the low-oxygen-concentration atmosphere is set to 10% by volume or lower, the oxidation of the Cs-HTB phase can be suppressed from excessively proceeding, and the infrared absorbing characteristics of the near-infrared absorbing particles of the present embodiment can be enhanced.

The heating temperature in the oxidation stage is desirably 300°C or higher and 550°C or lower and more desirably 350°C or higher and 500°C or lower. When the heating temperature in the oxidation stage is set to 300°C or higher, the oxidation of WO_{3-y1} can sufficiently proceed. Also, when the heating temperature in the oxidation stage is set to 550°C or lower, the oxidation of CsₓWO_{3-y2} can be suppressed from excessively proceeding, and the infrared absorbing characteristics of the near-infrared absorbing particles can be enhanced.

The oxidation stage may be followed by a heat treatment in an inert atmosphere, such as an Ar gas or the like, at a temperature of 350°C or higher and 950°C or lower (annealing stage).

The oxygen of the WO₆ octahedron that forms the skeleton of the Cs-HTB forming the ITB contained in the near-infrared absorbing particle of the present embodiment may be deficient in part. The amount of such deficient oxygens tends to increase with increasing of the Cs/W ratio by mole of cesium (Cs) and tungsten (W) contained in the near-infrared absorbing particles of the present embodiment. Deficiency of the octahedral oxygen generates localized electrons and free electrons, and induces localized surface plasmon resonance and polaronic near-infrared absorption. The light absorption of the Cs-HTB is caused largely because of the oxygen deficiency (Non-Patent Document 2). Thus, it is preferable to introduce as many oxygen deficiencies as possible even in the Cs-HTB contained in the ITB. Therefore, oxygen deficiencies are preferably contained in one or more selected from the tungsten oxide and the hexagonal tungsten bronze that are contained in the near-infrared absorbing particles of the present embodiment. As described above, when oxygen deficiencies are contained in one or more selected from the tungsten oxide and the hexagonal tungsten bronze that are contained in the near-infrared absorbing particles, the near-infrared absorbing characteristics can be enhanced. From the viewpoint of particularly enhancing the near-infrared absorbing characteristics, the oxygen deficiency of the hexagonal tungsten bronze is important. Thus, at least the hexagonal tungsten bronze preferably has the oxygen deficiency.

However, when the level of the reduction is too high, the reduction proceeds to WO₂ or the metal W, and the Cs-HTB may be decomposed. In CsₓWO_{3-y2} that has the Cs-HTB phase, when y2 reaches about 0.46, the Cs-HTB may be decomposed as described above. Therefore, the O/W ratio by mole of oxygen (O) and tungsten (W) contained in the near-infrared absorbing particles of the present embodiment is preferably 2.6 or more. Also, from the viewpoint of suppressing the oxidation of the Cs-HTB phase from excessively proceeding as described above, the O/W ratio is preferably less than 2.99.

### (Average particle diameter)

No particular limitation is imposed on the average particle diameter of the near-infrared absorbing particles of the present embodiment. However, the average particle diameter thereof is preferably 0.1 nm or more and 200 nm or less. One reason for this is as follows. Specifically, when the average particle diameter of the near-infrared absorbing particles is 200 nm or less, localized surface plasmon resonance is remarkably developed. Thus, the near-infrared absorbing characteristics can be particularly enhanced, i.e., the solar radiation transmittance can be particularly suppressed. Another reason is that when the average particle diameter of the near-infrared absorbing particles is 0.1 nm or more, the near-infrared absorbing particles can be readily produced industrially. The particle diameter is closely related to the color of the near-infrared absorbing particle dispersion or the like, which is a dispersion transmissive film in which the near-infrared absorbing particles are dispersed. In a particle diameter range in which Mie scattering is dominant, the smaller the particle diameter, the smaller the scattering of short wavelengths in the visible light region. Therefore, increasing the particle diameter especially suppresses the blue color tone. However, when the particle diameter exceeds 100 nm, the haze of the film due to light scattering may be increased. When the particle diameter exceeds 200 nm, generation of the surface plasmon is suppressed in addition to the increase in the haze of the film, and LSPR absorption may be reduced.

Here, the average particle diameter of the near-infrared absorbing particles can be a median diameter of a plurality of near-infrared absorbing particles measured from a transmission electron microscope image, or can be a dispersed particle diameter measured by a particle size analyzer based on a dynamic light scattering method of a dispersion liquid.

In applications in which priority is given to transparency in the visible light region, e.g., in cases in which it is required to particularly suppress the influence of the near-infrared absorbing particle dispersion or the like on the color tone, it is preferable to further consider the reduction in scattering by the near-infrared absorbing particles. When the reduction in scattering is prioritized, the average particle diameter of the near-infrared absorbing particles is more preferably 100 nm or less and further preferably 30 nm or less.

### (Coating)

Also, the near-infrared absorbing particles may be subjected to a surface treatment for protecting the surface, improving durability, preventing oxidation, and increasing water resistance. No particular limitation is imposed on what is specifically performed with the surface treatment. For example, the near-infrared absorbing particles of the present embodiment may be coated and modified with a compound containing one or more atoms selected from Si, Ti, Zr, and Al. The compound containing one or more atoms (elements) selected from Si, Ti, Zr, and Al is, for example, one or more selected from oxides, nitrides, carbides, and the like.

### (2) Production method for the near-infrared absorbing particles

Next, the production method for the near-infrared absorbing particles of the present embodiment will be described. According to the production method for the near-infrared absorbing particles of the present embodiment, it is possible to produce the above-described near-infrared absorbing particles. Thus, description of the matters that are already described will be omitted.

No particular limitation is imposed on the production method for the near-infrared absorbing particles of the present embodiment. The production method for the near-infrared absorbing particles of the present embodiment may be any method as long as the method can produce near-infrared absorbing particles that satisfy the above-described characteristics. Here, an example of the production method for the near-infrared absorbing particles of the present embodiment will be described.

The production method for the near-infrared absorbing particles of the present embodiment is a production method for the above-described near-infrared absorbing particles, and may include a mixing stage, a reducing crystallization stage, and the like.

In the following, the stages will be described below.

### (Mixing stage)

The mixing stage can mix a cesium-containing compound and a tungsten-containing compound, thereby preparing a raw material mixture.

In the mixing stage, the raw material mixture can be prepared such that the Cs/W ratio by mole of cesium (Cs) and tungsten (W) contained in the raw material mixture is 0.01 or more and 0.20 or less.

No particular limitation is imposed on the cesium-containing compound and the tungsten-containing compound to be used in the mixing stage. These may be any materials containing cesium and tungsten. Examples thereof include cesium carbonate, cesium nitrate, cesium chloride, tungsten trioxide, tungstic acid hydrate, and the like.

When a part of the cesium is substituted with the above additive element, a raw material containing the additive element may be added to and mixed with the raw material mixture.

### (Reducing crystallization stage)

The reducing crystallization stage can heat and crystallize the raw material mixture in a reducing gas atmosphere at a temperature of 350°C or higher and 950°C or lower. The heating and crystallization are more preferably performed at a 450°C or higher and 650°C or lower.

By performing the reducing crystallization stage, the near-infrared absorbing particles containing the ITB having a desired composition can be obtained.

It is preferable to perform the reducing treatment under a stream of a reducing gas when the reducing treatment is performed. As the reducing gas, a gas mixture containing a reducing gas, such as hydrogen or the like, and one or more inert gases selected from an Ar gas, a N₂ gas, and the like can be used. In addition, mild heating and reducing conditions, such as heating in a moisture atmosphere or a vacuum atmosphere, may also be used together.

After the reducing crystallization stage, heat treatment may be performed in an inert atmosphere of an Ar gas, a N₂ gas, or the like (in a neutral atmosphere) at 350°C or higher and 950°C or lower (annealing stage).

The production method for the near-infrared absorbing particles of the present embodiment is not particularly limited to the above embodiment. As the production method for the near-infrared absorbing particles, it is possible to employ various methods that can form predetermined structures including the ITB structure in which WO_{3-y1} and CsₓWO_{3-y2} are mixed. Examples of the production method for the near-infrared absorbing particles include: a method of reducing a tungstate obtained by a solid phase method, a liquid phase method, or a gas phase method; a method of reducing WO₃ in a molten alkali halide; and the like.

The production method for the near-infrared absorbing particles may further include optional stages.

### (Oxidation stage)

For example, the production method for the near-infrared absorbing particles of the present embodiment may further include an oxidation stage.

The oxidation stage can heat the powder obtained in the reducing crystallization stage at 300°C or higher and 550°C or lower in a low-oxygen-concentration atmosphere.

When the near-infrared absorbing particles containing the ITB obtained in the reducing crystallization stage are subjected to the oxidation stage, the blue color caused by WO_{3-y1} can be avoided, and the color can be adjusted. The oxidation stage can be appropriately performed in accordance with the color tone required in accordance with applications and the like.

The oxidation stage is preferably performed in a low-oxygen-concentration atmosphere having an oxygen concentration of 1% by volume or higher and 10% by volume or lower. The low-oxygen-concentration atmosphere preferably has an oxygen concentration of 1% by volume or higher and 7% by volume or lower. As the low-oxygen-concentration atmosphere, it is preferable to use a gas mixture of air and an inert gas, such as an Ar gas, a N₂ gas, or the like.

When the oxygen concentration of the low-oxygen-concentration atmosphere is set to 1% by volume or higher, the oxidation of WO_{3-y1} can proceed, and the color of the near-infrared absorbing particles can be readily adjusted. Also, when the oxygen concentration of the low-oxygen-concentration atmosphere is set to 10% by volume or lower, the oxidation of the Cs-HTB phase can be suppressed from excessively proceeding, and the infrared absorbing characteristics of the near-infrared absorbing particles of the present embodiment can be enhanced.

As described above, the heating temperature in the oxidation stage is desirably 300°C or higher and 550°C or lower and more desirably 350°C or higher and 500°C or lower. When the heating temperature in the oxidation stage is set to 300°C or higher, the oxidation of WO_{3-y1} can sufficiently proceed. Also, when the heating temperature in the oxidation stage is set to 550°C or lower, the oxidation of CsₓWO_{3-y2} can be suppressed from excessively proceeding, and the infrared absorbing characteristics of the near-infrared absorbing particles can be enhanced.

After the oxidation stage, a heat treatment may be performed in an inert atmosphere (neutral atmosphere), such as an Ar gas, a N₂ gas, or the like at 350°C or higher and 950°C or lower (annealing stage).

### (Pulverization stage)

The near-infrared absorbing particles are preferably micronized into particles. Therefore, the production method for the near-infrared absorbing particles may include a pulverization stage of pulverizing the powder obtained in the reducing crystallization stage. When the oxidation stage or the annealing stage is performed as described above, the pulverization stage may be performed after these stages.

No particular limitation is imposed on specific means for micronization, which can be various means configured to perform mechanical pulverization. The mechanical pulverization method can be a dry pulverization method using a jet mill or the like. Further, in a below-described process of obtaining the near-infrared absorbing particle dispersion liquid, the near-infrared absorbing particles may be mechanically pulverized in a liquid medium serving as a solvent. In this case, the near-infrared absorbing particles are dispersed in the liquid medium in the pulverization stage, and thus the pulverization stage can also be referred to as a pulverization and dispersion stage.

### (Modification stage)

As described above, the surfaces of the near-infrared absorbing particles may be modified with a compound containing one or more atoms selected from Si, Ti, Zr, and Al. Therefore, the production method for the near-infrared absorbing particles may further include, for example, a modification stage of modifying the near-infrared absorbing particles with a compound containing one or more atoms selected from Si, Ti, Zr, and Al.

No particular limitation is imposed on specific conditions for modifying the near-infrared absorbing particles in the modification stage. The production method for the near-infrared absorbing particles of the present embodiment may also include, for example, a modification stage of adding an alkoxide or the like containing one or more atoms selected from the above atom group (metal group) to the near-infrared absorbing particles to be modified, thereby forming a film on the surfaces of the near-infrared absorbing particles.

### [Near-infrared absorbing particle dispersion liquid]

Next, an example of the near-infrared absorbing particle dispersion liquid of the present embodiment will be described.

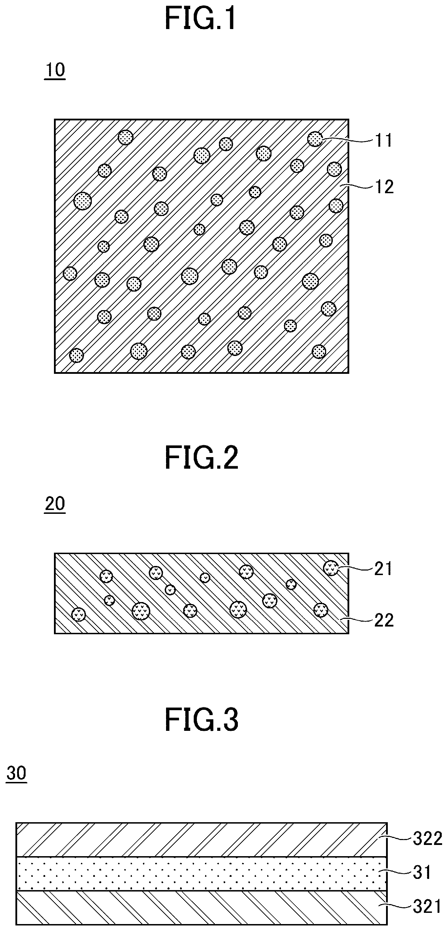

The near-infrared absorbing particle dispersion liquid of the present embodiment may include the above-described near-infrared absorbing particles and a liquid medium that is one or more selected from water, an organic solvent, fats and oils, a liquid resin, and a liquid plasticizer. That is, for example, as illustrated in FIG. 1, a near-infrared absorbing particle dispersion liquid 10 of the present embodiment may include near-infrared absorbing particles 11 described above and a liquid medium 12. The near-infrared absorbing particle dispersion liquid preferably has a form in which the near-infrared absorbing particles are dispersed in the liquid medium.

FIG. 1 is a schematically illustrated diagram, and the near-infrared absorbing particle dispersion liquid of the present embodiment is not limited to such a form. For example, FIG. 1 illustrates the near-infrared absorbing particles 11 as spherical particles, but the shape of the near-infrared absorbing particles 11 is not limited to such a shape and may be any shape. As described above, the near-infrared absorbing particles 11 may include, for example, a coating or the like on the surfaces thereof. In addition to the near-infrared absorbing particles 11 and the liquid medium 12, the near-infrared absorbing particle dispersion liquid 10 may contain additional additives, if necessary.

As the liquid medium, as described above, one or more selected from water, an organic solvent, fats and oils, a liquid resin, and a liquid plasticizer may be used.

As the organic solvent, various solvents, such as alcohols, ketones, hydrocarbons, and glycols, can be selected. Specifically, the organic solvent can be, for example, one or more selected from alcohol-based solvents, such as isopropyl alcohol, methanol, ethanol, 1-propanol, isopropanol, butanol, pentanol, benzyl alcohol, diacetone alcohol, 1-methoxy-2-isopanol, and the like; ketone-based solvents, such as dimethyl ketone, acetone, methyl ethyl ketone, methyl propyl ketone, methyl isobutyl ketone, cyclohexanone, isophorone, and the like; ester-based solvents, such as 3-methylmethoxy-propionate, butyl acetate, and the like; glycol derivatives, such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, propylene glycol ethyl ether acetate, and the like; amides, such as formamide, N-methylformamide, dimethylformamide, dimethylacetamide, N-methyl-2-pyrrolidone, and the like; aromatic hydrocarbons, such as toluene, xylene, and the like; and halogenated hydrocarbons, such as ethylene chloride, chlorobenzene, and the like.

Of these, organic solvents having low polarity are preferable. In particular, isopropyl alcohol, ethanol, 1-methoxy-2-propanol, dimethyl ketone, methyl ethyl ketone, methyl isobutyl ketone, toluene, propylene glycol monomethyl ether acetate, n-butyl acetate, and the like are more preferable. These organic solvents can be used alone or in combination.

As the fats and oils, it is possible to use, for example, one or more selected from dry oils, such as linseed oil, sunflower oil, tung oil, and the like; semi-dry oils, such as sesame oil, cottonseed oil, rapeseed oil, soybean oil, rice bran oil, and the like; non-dry oils, such as olive oil, coconut oil, palm oil, and dehydrated castor oil; fatty acid monoesters obtained by directly esterifying fatty acids of vegetable oils with monoalcohols; ethers; petroleum-based solvents, such as ISOPAR (registered trademark) E, EXXSOL (registered trademark) Hexane, Heptane, E, D30, D40, D60, D80, D95, D110, and D130 (these are available from Exxon Mobil Corporation); and the like.

As the liquid resin, it is possible to use, for example, one or more selected from a liquid acrylic resin, a liquid epoxy resin, a liquid polyester resin, a liquid urethane resin, and the like.

As the liquid plasticizer, it is possible to use, for example, a liquid plasticizer for plastics or the like.

The components contained in the near-infrared absorbing particle dispersion liquid are not limited to the above-described near-infrared absorbing particles and the liquid medium. The near-infrared absorbing particle dispersion liquid can further be supplemented with or contain optional components, if necessary.

For example, an acid or an alkali may be added to the near-infrared absorbing particle dispersion liquid, if necessary, thereby adjusting the pH of the dispersion liquid.

Also, in order to further increase dispersion stability of the near-infrared absorbing particles and avoid an increase in the dispersed particles' diameter due to re-aggregation in the above-described near-infrared absorbing particle dispersion liquid, various surfactants, coupling agents, and the like may be added to the near-infrared absorbing particle dispersion liquid as a dispersant.

The dispersant, such as surfactants, coupling agents, and the like, can be selected in accordance with applications. However, the dispersant preferably includes one or more functional groups selected from an amine-containing group, a hydroxy group, a carboxyl group, and an epoxy group. These functional groups are attached to the surfaces of the near-infrared absorbing particles to prevent aggregation, and have the effect of uniformly dispersing the near-infrared absorbing particles even in an infrared shielding film formed by using the near-infrared absorbing particles. A polymer-based dispersant having one or more selected from the above functional groups (group of the functional groups) in the molecule thereof is more desirable.

Commercially available dispersants that are suitably usable include, for example, one or more selected from: SOLSPERSE (registered trademark) 9000, 12000, 17000, 20000, 21000, 24000, 26000, 27000, 28000, 32000, 35100, 54000, and 250 (available from The Lubrizol Corporation, Japan); EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (available from EFKA ADDITIVES); AJISPER (registered trademark) PA111, PB821, PB822, and PN411, and FEYMEX L-12 (available from Ajinomoto Fine-Techno Co., Inc.); DISPERBYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (available from BYK Chemie GmbH); DISPARLON (registered trademark) 1751N, 1831, 1850, 1860, 1934, DA-400N, DA-703-50, DA-725, DA-705, DA-7301, DN-900, NS-5210, and NVI-8514L (available from Kusumoto Chemicals, Ltd.); and ARUFON (registered trademark) UC-3000, UF-5022, UG-4010, UG-4035, and UG-4070 (available from TOAGOSEI CO., LTD.).

No particular limitation is imposed on the method for dispersing the near-infrared absorbing particles into the liquid medium as long as the method can disperse the near-infrared absorbing particles into the liquid medium. At this time, the near-infrared absorbing particles are preferably dispersed so as to have an average particle diameter of 200 nm or less and more preferably 0.1 nm or more and 200 nm or less.

The method for dispersing the near-infrared absorbing particles into the liquid medium is, for example, a dispersion method using a device, such as a bead mill, a ball mill, a sand mill, a paint shaker, an ultrasonic homogenizer, or the like. Of these, it is preferable to perform pulverization and dispersion in a media-based stirring mill, such as a bead mill, a ball mill, a sand mill, a paint shaker, or the like using media (beads, balls, and Ottawa sand) from the viewpoint of reducing the time required for obtaining a desired average particle diameter. Through the pulverization-dispersion treatment using the media-base stirring mill, micronization proceeds by the effect of collision between the near-infrared absorbing particles and by the effect of collision of the media with the near-infrared absorbing particles at the same time as dispersing the near-infrared absorbing particles into the liquid medium. This can further micronize the near-infrared absorbing particles upon dispersing the near-infrared absorbing particles. That is, the pulverization-dispersion treatment is performed.

The average particle diameter of the near-infrared absorbing particles is preferably from 0.1 nm or more and 200 nm or less as described above. The reason for this is as follows. Specifically, smaller average particle diameters reduce scattering of light in the visible light region having a wavelength of 400 nm or longer and 780 nm or shorter owing to geometric scattering or Mie scattering. As a result, it is possible to obtain clear transparency of the near-infrared absorbing particle dispersion obtained from the near-infrared absorbing particle dispersion liquid of the present embodiment. For example, it is possible to prevent the near-infrared absorbing particle dispersion, in which the near-infrared absorbing particles are dispersed in a resin or the like, from becoming like frosted glass. That is, when the average particle diameter is 200 nm or less, light scattering becomes weaker in the mode of geometric scattering or Mie scattering, and becomes in the Rayleigh scattering mode. This is because scattered light in the Rayleigh scattering region is proportional to the sixth power of the dispersed particles' diameter, and as the dispersed particles' diameter decreases, scattering is reduced and transparency is improved. When the average particle diameter is 100 nm or less, the scattered light is extremely reduced, which is preferable. More preferably, the average particle diameter is 30 nm or less.

The dispersed state of the near-infrared absorbing particles in the near-infrared absorbing particle dispersion in which the near-infrared absorbing particles are dispersed in a solid medium, such as a resin or the like, which is obtained from the near-infrared absorbing particle dispersion liquid of the present embodiment, does not cause aggregation so as to have an average particle diameter that is more than the average particle diameter of the near-infrared absorbing particles in the dispersion liquid as long as a publicly known method of adding the dispersion liquid to the solid medium is performed.

When the average particle diameter of the near-infrared absorbing particles is 0.1 nm or more and 200 nm or less, it is possible to avoid the produced near-infrared absorbing particle dispersion and the molded products thereof (e.g., plates, sheets, and the like) having a gray color with monotonously reduced transmittance.

No particular limitation is imposed on the content of the near-infrared absorbing particles in the near-infrared absorbing particle dispersion liquid of the present embodiment. However, the content thereof is preferably 0.01% by mass or more and 80% by mass or less, for example. This is because when the content of the near-infrared absorbing particles is 0.01% by mass or more, satisfactory solar radiation transmittance can be exhibited, i.e., solar radiation transmittance can be sufficiently suppressed. When the content thereof is 80% by mass or less, the near-infrared absorbing particles can be uniformly dispersed in a dispersion medium.

### [Near-infrared absorbing particle dispersion]

Next, a structural example of the near-infrared absorbing particle dispersion of the present embodiment will be described.

The near-infrared absorbing particle dispersion of the present embodiment includes the above-described near-infrared absorbing particles and the solid medium. Specifically, for example, as schematically illustrated in FIG. 2, a near-infrared absorbing particle dispersion 20 can include near-infrared absorbing particles 21 described above and a solid medium 22. The near-infrared absorbing particles 21 can be disposed in the solid medium 22. In the near-infrared absorbing particle dispersion of the present embodiment, the near-infrared absorbing particles are preferably dispersed in the solid medium. FIG. 2 is a schematically illustrated diagram, and the near-infrared absorbing particle dispersion of the present embodiment is not limited to such a form. For example, FIG. 2 illustrates the near-infrared absorbing particles 21 as spherical particles, but the shape of the near-infrared absorbing particles 21 is not limited to such a shape and may be any shape. The near-infrared absorbing particles 21 may include, for example, a coating or the like on the surfaces thereof. In addition to the near-infrared absorbing particles 21 and the solid medium 22, the near-infrared absorbing particle dispersion 20 may contain additional additives, if necessary.

In the following, the near-infrared absorbing particle dispersion according to the present embodiment will be described in the order of (1) characteristics of the solid medium and the near-infrared absorbing particle dispersion, (2) production method for the near-infrared absorbing particle dispersion, (3) additives, and (4) application examples.

### (1) Characteristics of the solid medium and the near-infrared absorbing particle dispersion

Examples of the solid medium include medium resins, such as thermoplastic resins, thermosetting resins, and ultraviolet curable resins. That is, resins are suitably used as the solid medium.

No particular limitation is imposed on the specific material of the resin used for the solid medium. For example, the specific material of the resin used for the solid medium is preferably one resin selected from the resin group consisting of a polyester resin, a polycarbonate resin, an acrylic resin, a styrene resin, a polyamide resin, a polyethylene resin, a vinyl chloride resin, an olefin resin, an epoxy resin, a polyimide resin, a fluororesin, an ethylenevinyl acetate copolymer, a polyvinyl acetal resin, and an ultraviolet curable resin, or is a mixture of two or more resins selected from the above resin group. The polyester resin that is suitably usable is a polyethylene terephthalate resin.

These medium resins can also contain a polymer-based dispersant including, in the backbone thereof, one or more functional groups selected from an amine-containing group, a hydroxy group, a carboxyl group, and an epoxy group.

The solid medium is not limited to the medium resin, and a binder using a metal alkoxide can also be used as the solid medium. As the metal alkoxide, alkoxides of Si, Ti, Al, Zr, and the like are typical examples. By hydrolysis and polycondensation of the binder containing these metal alkoxides through heating or the like, it is also possible to obtain a near-infrared absorbing particle dispersion in which the solid medium contains the oxide.

No particular limitation is imposed on the content percentage of the near-infrared absorbing particles in the near-infrared absorbing particle dispersion according to the present embodiment. Preferably, the near-infrared absorbing particle dispersion contains the near-infrared absorbing particles in an amount of 0.001% by mass or more and 80% by mass or less.

No particular limitation is imposed on the shape of the near-infrared absorbing particle dispersion of the present embodiment. However, the near-infrared absorbing particle dispersion of the present embodiment is preferably formed to have a sheet shape, a board shape, or a film shape. This is because the near-infrared absorbing particle dispersion can be applied to various applications when the near-infrared absorbing particle dispersion is formed to have a sheet shape, a board shape, or a film shape.

The color tone of the near-infrared absorbing particle dispersion of the present embodiment is changed in accordance with the concentration of the contained near-infrared absorbing particles. When the Hunter color index of the near-infrared absorbing particle dispersion of the present embodiment is evaluated based on a color tone having a density of, for example, L^{*}=92±1, i.e., in a cross section of L^{*}=92±1 of the Hunter color index, the near-infrared absorbing particle dispersion of the present embodiment preferably has a near-infrared shielding property having a solar radiation transmittance of 65% or lower and exhibits color tone neutrality satisfying b^{*}≥1.6×a^{*}+8.0. In order for the dispersion to be seen in a neutral color, a higher b^{*} value is required as a color index a* becomes higher. The standard thereof is b^{*}≥1.6×a^{*}+8.0, and thus satisfying the above definition is preferable.

### (2) Production method for the near-infrared absorbing particle dispersion

The production method for the near-infrared absorbing particle dispersion of the present embodiment will be described below. The following merely illustrates an example of the production method for the near-infrared absorbing particle dispersion. The production method for the above-described near-infrared absorbing particle dispersion is not limited to the following example.

The near-infrared absorbing particle dispersion of the present embodiment can be produced using, for example, a masterbatch. In this case, the production method for the near-infrared absorbing particle dispersion of the present embodiment can also include, for example, a masterbatch preparation stage described below.

Masterbatch preparation stage for obtaining the masterbatch in which the near-infrared absorbing particles are dispersed in the solid medium

The masterbatch preparation stage can prepare a masterbatch in which the near-infrared absorbing particles are dispersed in the solid medium.

No particular limitation is imposed on the specific preparation method for the masterbatch. For example, the masterbatch can be prepared by dispersing the near-infrared absorbing particle dispersion liquid or the near-infrared absorbing particles in the solid medium and by pelletizing the solid medium.

The near-infrared absorbing particles that can be used are near-infrared absorbing particle dispersion powder obtained by removing the liquid medium from the near-infrared absorbing particle dispersion liquid.

For example, a mixture is prepared by uniformly mixing the near-infrared absorbing particle dispersion liquid, the near-infrared absorbing particles, the near-infrared absorbing particle dispersion powder, powder or pellets of the solid medium, and other optional additives. Then, the mixture is kneaded with a vent-type uniaxial or biaxial extruder, and processed into pellets by a method of cutting a melt-extruded strand. In this case, the shape of the pellet may be cylindrical or prismatic. When producing the pellets, it is also possible to employ what is called a hot cut method in which the melt extrudate is cut directly. In this case, the produced pellet generally has an approximately spherical shape.

When the near-infrared absorbing particle dispersion liquid is used as a raw material in the masterbatch preparation stage, it is preferable to reduce or remove the liquid medium derived from the near-infrared absorbing particle dispersion liquid. In this case, no particular limitation is imposed on the extent to which the liquid medium contained in the near-infrared absorbing particle dispersion liquid is removed. For example, it is preferable to remove the liquid medium from the near-infrared absorbing particle dispersion liquid or the like to an acceptable amount of the liquid medium remaining in the masterbatch. When the liquid plasticizer is used as the liquid medium, the total amount of the liquid plasticizer may remain in the near-infrared absorbing particle dispersion.

No particular limitation is imposed on the method of reducing or removing the liquid medium, contained in the near-infrared absorbing particle dispersion liquid, from the near-infrared absorbing particle dispersion liquid or from the mixture of the near-infrared absorbing particle dispersion liquid and the solid medium. For example, it is preferable to dry the near-infrared absorbing particle dispersion liquid or the like under reduced pressure. Specifically, the near-infrared absorbing particle dispersion liquid or the like is dried under reduced pressure under stirring, thereby separating a near-infrared absorbing particle-containing composition and the components of the liquid medium. An apparatus used for drying under reduced pressure is, for example, a vacuum stirring-type dryer. However, no particular limitation is imposed on the apparatus used for drying under reduced pressure as long as the apparatus has the above function. Also, the pressure value upon reduction in pressure in a drying stage of performing drying under reduced pressure is appropriately selected.

By using the above vacuum drying method, removal efficiency of the liquid medium or the like derived from the near-infrared absorbing particle dispersion liquid is increased. In addition, the near-infrared absorbing particle dispersion powder obtained after drying under reduced pressure or the near-infrared absorbing particle dispersion liquid serving as a raw material is not exposed to a high temperature for a long period of time. Thus, no aggregation of the near-infrared absorbing particle dispersion powder or the near-infrared absorbing particles dispersed in the near-infrared absorbing particle dispersion liquid occurs, which is preferable. Further, productivity of the near-infrared absorbing particle dispersion powder or the like is increased, and the solvent, such as the evaporated liquid medium or the like, can be readily recovered, which is preferable from the viewpoint of environmental friendliness.

In the near-infrared absorbing particle dispersion powder or the like obtained after the drying stage, it is preferable to sufficiently remove the solvent component having a boiling point of 120°C or lower. For example, the residual amount of the solvent component is preferably 2.5% by mass or less. When the residual solvent component is 2.5% by mass or less, no bubbles are generated when the near-infrared absorbing particle dispersion powder or the like is processed, for example, into a near-infrared absorbing particle dispersion. Thus, the outer appearance and optical characteristics are maintained favorably. Also, when the amount of the solvent component remaining in the near-infrared absorbing particle dispersion powder is 2.5% by mass or less, as the powder is stored in the state of the near-infrared absorbing particle dispersion powder for a long period of time, aggregation due to natural drying of the residual solvent component does not occur, and long-term stability is maintained.

By the addition of the solid medium followed by kneading of the resulting mixture, the concentration of the near-infrared absorbing particles dispersed in the obtained masterbatch can be adjusted while maintaining the dispersed state of the near-infrared absorbing particles contained in the masterbatch, which is the near-infrared absorbing particle dispersion.

The production method for the near-infrared absorbing particle dispersion of the present embodiment may include, if necessary, a molding stage of molding the obtained masterbatch or the masterbatch supplemented with the solid medium as described above into the near-infrared absorbing particle dispersion having a desired shape.

No particular limitation is imposed on the specific method of molding the near-infrared absorbing particle dispersion. However, it is possible to use a publicly known method, such as an extrusion molding method, an injection molding method, or the like.

The molding stage can produce, for example, the near-infrared absorbing particle dispersion formed to have a flat or curved shape, i.e., a sheet shape, a board shape, or a film shape. No particular limitation is imposed on the method of molding the near-infrared absorbing particle dispersion to have a sheet shape, a board shape, or a film shape, and various publicly known methods may be used. For example, calendar rolling, extrusion, casting, inflation, or the like can be used.

The production method for the near-infrared absorbing particle dispersion of the present embodiment is not limited to the form including the masterbatch preparation stage.

For example, the production method for the near-infrared absorbing particle dispersion of the present embodiment can also take a form including the following stages.

A precursor liquid preparation stage of preparing a near-infrared absorbing particle dispersion precursor liquid by mixing a monomer or oligomer of the solid medium and an uncured liquid precursor of the solid medium with the near-infrared absorbing particles, the near-infrared absorbing particle dispersion powder, or the near-infrared absorbing particle dispersion liquid.

A near-infrared absorbing particle dispersion preparation stage of preparing the near-infrared absorbing particle dispersion by curing the solid medium precursor, such as the monomer or the like, through a chemical reaction, such as condensation, polymerization, or the like.

For example, when an acrylic resin is used as the solid medium, the near-infrared absorbing particle dispersion precursor liquid can be obtained by mixing an acrylic monomer or an acrylic ultraviolet curable resin with the near-infrared absorbing particles.

Next, the near-infrared absorbing particle dispersion precursor liquid is charged into a predetermined mold or the like, followed by radical polymerization, thereby obtaining a near-infrared absorbing particle dispersion using the acrylic resin.

When a resin curable through crosslinking is used as the solid medium, the near-infrared absorbing particle dispersion can be obtained through crosslinking reaction of the near-infrared absorbing particle dispersion precursor liquid in the same manner as in the case of using the acrylic resin.

### (3) Additives

When a resin is used as the solid medium, the near-infrared absorbing particle dispersion of the present embodiment can also contain publicly known additives (supplements), such as a plasticizer, a flame retardant, an anti-coloring agent, a filler, and the like, which are usually added to the resin. However, as described above, the solid medium is not limited to the resin, and the binder using the metal alkoxide can also be used.

No particular limitation is imposed on the shape of the near-infrared absorbing particle dispersion according to the present embodiment. However, as described above, the near-infrared absorbing particle dispersion can be formed to have a sheet shape, a board shape, a film shape, or the like.

When the near-infrared absorbing particle dispersion having a sheet shape, a board shape, or a film shape is used as an intermediate layer of a transparent base, such as laminated glass, the solid medium contained in the near-infrared absorbing particle dispersion may be insufficient in flexibility or adhesiveness to the transparent base as it is. In this case, the near-infrared absorbing particle dispersion preferably contains a plasticizer. Specifically, for example, when the solid medium is a polyvinyl acetal resin and is used for the above application, the near-infrared absorbing particle dispersion preferably further contains a plasticizer.

As the above-described plasticizer, a substance used as the plasticizer in the solid medium used for the near-infrared absorbing particle dispersion of the present embodiment can be used. For example, the plasticizer used for the near-infrared absorbing particle dispersion in which the solid medium is formed of a polyvinyl acetal resin is, for example, a plasticizer that is a compound formed of a monohydric alcohol and an organic acid ester, an ester-based plasticizer, such as a polyhydric alcohol organic acid ester compound or the like, and a phosphoric acid-based plasticizer, such as an organophosphoric acid-based plasticizer or the like. All of the plasticizers are preferably liquid at room temperature. Of these, a plasticizer that is an ester compound synthesized from a polyhydric alcohol and a fatty acid is preferable.

### (4) Application examples

The near-infrared absorbing particle dispersion of the present embodiment can be used in various forms, and no particular limitation is imposed on uses and applications thereof. In the following, a near-infrared absorbing intermediate film, a near-infrared absorbing stack, and a near-infrared absorbing transparent base will be described as application examples of the near-infrared absorbing particle dispersion of the present embodiment.

### (4-1) Near-infrared absorbing intermediate film, near-infrared absorbing stack

The near-infrared absorbing stack of the present embodiment can have a stacked structure including the above-described near-infrared absorbing particle dispersion and the transparent base. The near-infrared absorbing stack of the present embodiment can include the above-described near-infrared absorbing particle dispersion and the transparent base as components thereof, and can be a stacked structure in which these are stacked.

The near-infrared absorbing stack is, for example, a stack of two or more transparent bases and the above-described near-infrared absorbing particle dispersion. In this case, the near-infrared absorbing particle dispersion can be disposed, for example, between the transparent bases and used as the near-infrared absorbing intermediate film.

In this case, specifically, as illustrated in FIG. 3, which is a schematic cross-sectional view taken along the stacking direction of the transparent base and the near-infrared absorbing particle dispersion, a near-infrared absorbing stack 30 can include a plurality of transparent bases 321 and 322 and a near-infrared absorbing particle dispersion 31. The near-infrared absorbing particle dispersion 31 can be disposed between the plurality of transparent bases 321 and 322. FIG. 3 illustrates an example including two transparent bases 321 and 322, but the present invention is not limited to such a form.

The near-infrared absorbing particle dispersion serving as the near-infrared absorbing intermediate film preferably has a sheet shape, a board shape, or a film shape.

The transparent base that is suitably usable is one or more selected from a glass plate, a platelike plastic, and a film-like plastic that are transparent in the visible light region.

When a plastic is used as the transparent base, no particular limitation is imposed on the material of the plastic, which can be selected in accordance with applications. It is possible to use, for example, one or more selected from a polycarbonate resin, an acrylic resin, a polyester resin, a polyamide resin, a vinyl chloride resin, an olefin resin, an epoxy resin, a polyimide resin, an ionomer resin, a fluororesin, and the like. The polyester resin that is suitably usable is a polyethylene terephthalate resin.

The transparent base may contain particles having a solar radiation shielding function. The particles having a solar radiation shielding function may be near-infrared absorbing particles having a near-infrared shielding property.

By interposing the above-described near-infrared absorbing particle dispersion as a member of the intermediate layer held between the plurality of transparent bases, it is possible to obtain a solar radiation shielding laminated structure, which is one type of the near-infrared absorbing stack. This solar radiation shielding laminated structure provides transmitted light having a more neutral color tone while suppressing solar radiation transmittance, and also can ensure transmittance of a sensor wavelength.

The above-described near-infrared absorbing stack can also be obtained by bonding and integrating, by a publicly known method, the plurality of transparent bases facing each other while holding the near-infrared absorbing particle dispersion therebetween.

When the above-described near-infrared absorbing particle dispersion is used as the near-infrared absorbing intermediate film, the solid medium may be of the above described for the near-infrared absorbing particle dispersion. However, from the viewpoint of enhancing the adhesion strength between the near-infrared absorbing intermediate film and the transparent base, the solid medium is preferably a polyvinyl acetal resin.

The near-infrared absorbing intermediate film of the present embodiment can be produced by the above-described production method for the near-infrared absorbing particle dispersion, thereby forming a near-infrared absorbing intermediate film having a sheet shape, a board shape, or a film shape.

When the near-infrared absorbing intermediate film does not have sufficient flexibility or adhesiveness to the transparent base, addition of a liquid plasticizer for the medium resin is preferable. For example, when the medium resin used for the near-infrared absorbing intermediate film is a polyvinyl acetal resin, the addition of the liquid plasticizer for the polyvinyl acetal resin is advantageous for increasing the adhesiveness to the transparent base.

As the plasticizer, a substance used as the plasticizer for the resin of the solid medium can be used. The plasticizer to be applied to the near-infrared absorbing particle dispersion using the polyvinyl acetal resin as the solid medium is, for example, a plasticizer that is a compound formed of a monohydric alcohol and an organic acid ester, an ester-based plasticizer, such as a polyhydric alcohol organic acid ester compound or the like, and a phosphoric acid-based plasticizer, such as an organophosphoric acid-based plasticizer or the like. All of the plasticizers are preferably liquid at room temperature. Of these, a plasticizer that is an ester compound synthesized from a polyhydric alcohol and a fatty acid is preferable.

Also, at least one selected from the group consisting of a silane coupling agent, a carboxylic acid metal salt, a metal hydroxide, and a metal carbonate can be added to the near-infrared absorbing intermediate film. No particular limitation is imposed on the metal forming the carboxylic acid metal salt, the metal hydroxide, and the metal carbonate, and the metal is preferably at least one selected from sodium, potassium, magnesium, calcium, manganese, cesium, lithium, rubidium, and zinc. In the near-infrared absorbing intermediate film, the content of at least one selected from the group consisting of the carboxylic acid metal salt, the metal hydroxide, and the metal carbonate is preferably 1% by mass or more and 100% by mass or less with respect to the near-infrared absorbing particles.

Further, in addition to the above-described near-infrared absorbing particles, the near-infrared absorbing intermediate film can contain, if necessary, oxide particles, complex oxide particles, boride particles, or any combination thereof containing two or more elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Tb, Lu, Sr, and Ca. The near-infrared absorbing intermediate film can contain such particles in a range of 5% by mass or more and 95% by mass or less with the total amount of these particles and the near-infrared absorbing particles being 100% by mass.

The near-infrared absorbing stack may contain an ultraviolet absorber in at least one of the intermediate layers (intermediate films) disposed between the transparent bases. The ultraviolet absorber is, for example, one or more selected from a compound having a malonic ester structure, a compound having an oxanilide structure, a compound having a benzotriazole structure, a compound having a benzophenone structure, a compound having a triazine structure, a compound having a benzoate structure, a compound having a hindered amine structure, and the like.

The intermediate layer of the near-infrared absorbing stack may be formed only of the near-infrared absorbing intermediate film according to the present embodiment.

The near-infrared absorbing intermediate film described here is an embodiment of the near-infrared absorbing particle dispersion. The near-infrared absorbing particle dispersion according to the present embodiment can be used without being held between two or more transparent bases through which visible light transmits. That is, the near-infrared absorbing particle dispersion according to the present embodiment can be used alone as a near-infrared absorbing particle dispersion.

The near-infrared absorbing stack according to the present embodiment is not limited to the above-described form in which the near-infrared absorbing particle dispersion is disposed between the transparent bases. Any configuration is possible as long as the configuration has a stacked structure including the near-infrared absorbing particle dispersion and the transparent base.

### (4-2) Near-infrared absorbing transparent base

The near-infrared absorbing transparent base of the present embodiment includes a transparent base and a near-infrared absorbing layer disposed on at least one surface of the transparent base, and the near-infrared absorbing layer can be the above-described near-infrared absorbing particle dispersion.

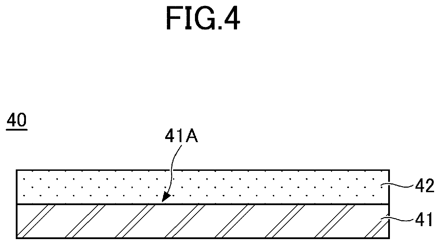

Specifically, as illustrated in FIG. 4, which is a schematic cross-sectional view taken along the stacking direction of the transparent base and the near-infrared absorbing layer, a near-infrared absorbing transparent base 40 may include a transparent base 41 and a near-infrared absorbing layer 42. The near-infrared absorbing layer 42 may be disposed on at least one surface 41A of the transparent base 41.

The near-infrared absorbing transparent base of the present embodiment may include a transparent base as described above. As the transparent base, for example, one or more selected from a transparent film base and a transparent glass base are preferably used.

The film base is not limited to a film shape, and may be, for example, a board shape or a sheet shape. The material of the film base that is suitably usable may be one or more selected from a polyester resin, an acrylic resin, a urethane resin, a polycarbonate resin, a polyethylene resin, an ethylenevinyl acetate copolymer, a vinyl chloride resin, a fluororesin, and the like, in accordance with various purposes. The material of the film base is preferably a polyester resin, and more preferably a polyethylene terephthalate resin (PET resin). That is, the film base is preferably a polyester resin film, and more preferably a polyethylene terephthalate resin film.

When the film base is used as the transparent base, the surface of the film base is preferably subjected to a surface treatment in order to facilitate adhesion to the near-infrared absorbing layer.

In order to increase adhesiveness between the glass or film base and the near-infrared absorbing layer, it is also preferable to form an intermediate layer on the glass or film base and to form a near-infrared absorbing layer on the intermediate layer. No particular limitation is imposed on the structure of the intermediate layer, which can be formed of, for example, a polymer film, a metal layer, an inorganic layer (e.g., an inorganic oxide layer formed of silica, titania, zirconia, or the like), an organic/inorganic composite layer, or the like.

The near-infrared absorbing particle dispersion has been described above, and thus description thereof is omitted here. No particular limitation is imposed on the shape of the near-infrared absorbing particle dispersion, which preferably has a sheet shape, a board shape, a film shape, or the like.

A production method for the near-infrared absorbing transparent base of the present embodiment will be described.

The near-infrared absorbing transparent base of the present embodiment can be produced by forming a near-infrared absorbing layer, which is a near-infrared absorbing particle dispersion in which near-infrared absorbing particles are dispersed in a solid medium, on a transparent base using, for example, the above-described near-infrared absorbing particle dispersion liquid.

Therefore, the production method for the near-infrared absorbing transparent base of the present embodiment may include, for example, the following stages.

An applying stage of applying a coating liquid containing the above-described near-infrared absorbing particle dispersion liquid on the surface of the transparent base.

A near-infrared absorbing layer forming stage of evaporating the liquid medium in the coating liquid and then forming a near-infrared absorbing layer.

The coating liquid used in the applying stage can be prepared, for example, by adding and mixing a solid medium, such as a resin or a metal alkoxide, or a solid medium precursor to and with the above-described near-infrared absorbing particle dispersion liquid.

The solid medium precursor means one or more selected from a monomer or oligomer of the solid medium and an uncured liquid precursor of the solid medium, as described above.

When the near-infrared absorbing layer, which is a coating film, is formed on the transparent base, the near-infrared absorbing layer becomes in a state in which the near-infrared absorbing particles are dispersed in the solid medium. Therefore, the near-infrared absorbing layer becomes a near-infrared absorbing particle dispersion. In this manner, the near-infrared absorbing transparent base can be produced by providing the near-infrared absorbing particle dispersion on the surface of the transparent base.

The solid medium and the solid medium precursor have been described in (1) Characteristics of the solid medium and the near-infrared absorbing particle dispersion and (2) Production method for the near-infrared absorbing particles. Thus, description thereof is omitted here.

No particular limitation is imposed on the applying method of applying the coating liquid onto the transparent base in order to provide the near-infrared absorbing layer on the transparent base. The applying method may be any method as long as the applying method can uniformly applying the coating liquid on the surface of the transparent base. Examples thereof include bar coating, gravure coating, spray coating, dip coating, spin coating, screen printing, roll coating, flow coating, and the like.

Here, a procedure for producing the near-infrared absorbing layer on the surface of the transparent base will be described by taking, as an example, a case in which an ultraviolet curable resin is used as the solid medium, and the coating liquid is coated through bar coating, thereby forming the near-infrared absorbing layer.

A coating liquid is prepared so as to have an appropriate extent of leveling properties and contain appropriate additives. The prepared coating liquid is applied on the transparent base by using a wire bar of a bar number that can successfully satisfy the thickness of the near-infrared absorbing layer and the content of the near-infrared absorbing particles. Then, a solvent of the liquid medium or the like contained in the coating liquid is removed through drying, followed by curing by irradiation with ultraviolet rays, thereby forming the coating layer, which is the near-infrared absorbing layer, on the transparent base.

Drying conditions of the coating film vary in accordance with components used, the type of a solvent used, and proportions thereof for use. However, usually, the drying conditions can be 20 seconds or longer and 10 minutes or shorter at a temperature of 60°C or higher and 140°C or lower. No particular limitation is imposed on the irradiation of ultraviolet rays. For example, an ultraviolet ray exposure machine, such as an ultra-high-pressure mercury lamp or the like, is suitably used.

In addition, adhesiveness between the base and the near-infrared absorbing layer, flatness of the coating film after coating, dryness of the organic solvent, and the like can be controlled by stages performed before and after the formation of the near-infrared absorbing layer (pre-stage and post-stage). The stages performed before and after the formation of the near-infrared absorbing layer include a surface treatment stage of the base, a pre-bake stage (preheating of the base), a post-bake stage (post-heating of the base), and the like, and can be appropriately selected. The heating temperature in the pre-bake stage and the post-bake stage is preferably 80°C or higher and 200°C or lower, and the heating time is preferably 30 seconds or longer and 240 seconds or shorter.

The production method for the near-infrared absorbing transparent base of the present embodiment is not limited to the above method. Another example of the production method for the near-infrared absorbing transparent base of the present embodiment includes the following stages.

A near-infrared absorbing particle dispersion liquid applying and drying stage of applying and then drying the above-described near-infrared absorbing particle dispersion liquid on the surface of the transparent base.

A binder applying and curing stage of applying and then curing a binder using a solid medium, such as a resin, a metal alkoxide, or the like, or a solid medium precursor on the surface coated with the near-infrared absorbing particle dispersion liquid.

In this case, a film in which the near-infrared absorbing particles are dispersed is formed on the surface of the transparent base in the near-infrared absorbing particle dispersion liquid applying and drying stage. The near-infrared absorbing particle dispersion liquid can be applied by the same method as described above with respect to the applying stage of the above-described production method for the near-infrared absorbing transparent base.

By applying and then curing the binder on the film in which the near-infrared absorbing particles are dispersed, the cured binder is disposed between the near-infrared absorbing particles, thereby forming the near-infrared absorbing layer.

The near-infrared absorbing transparent base can further include a coat layer on the surface of the near-infrared absorbing particle dispersion. That is, the near-infrared absorbing transparent base can include a multi-layered film.

The coat layer may be, for example, a coating film of an oxide containing one or more of Si, Ti, Zr, and Al. In this case, the coat layer may be formed, for example, by applying a coating liquid (coating solution) on the near-infrared absorbing layer, followed by heating. The coating liquid contains one or more selected from: alkoxides containing one or more of Si, Ti, Zr, and Al; and partially hydrolyzed polycondensation products of the alkoxides.

By providing the coat layer, the film is formed in a state in which the coated component fills the gaps between the deposited near-infrared absorbing particles, i.e., the first layer, thereby suppressing refraction of visible light. Thus, the haze value of the film can be further reduced, and the transmittance of visible light can be increased. Also, bonding properties of the near-infrared absorbing particles to the base can be enhanced.

Here, as the method for forming the coating film formed of the alkoxide containing one or more of Si, Ti, Zr, and Al, or partially hydrolyzed polycondensation products thereof on the near-infrared absorbing particles alone or on a film containing the near-infrared absorbing particles, an applying method is preferable from the viewpoint of ease and cost of film formation.

As the coating liquid used in the applying method, it is preferable to use a coating liquid containing, in a solvent (e.g., water, alcohol, or the like), one or more selected from: alkoxides containing one or more of Si, Ti, Zr, and Al; and partially hydrolyzed polycondensation products of the alkoxides. No particular limitation is imposed on the content of the alkoxide or the like in the coating liquid. However, for example, the content of the alkoxide or the like in the coating liquid is preferably 40% by mass or less in terms of an oxide in the coating obtained after heating. Also, if necessary, the pH of the coating liquid can be adjusted by the addition of an acid or an alkali.

By applying and then heating the coating liquid on a film mainly including the near-infrared absorbing particles as the second layer, an oxide coating (coat layer) containing one or more selected from Si, Ti, Zr, and Al can be readily formed. It is also preferable to use an organosilazane solution as a binder component used in the coating liquid or as a component of the coating liquid.

No particular limitation is imposed on the near-infrared absorbing particle dispersion liquid containing metal alkoxides of one or more of Si, Ti, Zr, and Al, and hydrolyzed polymers thereof, and on a base heating temperature after coating of the coating liquid. For example, the base heating temperature is preferably 100°C or higher, and more preferably is equal to or higher than the boiling point of the solvent in the coating liquid, such as the near-infrared absorbing particle dispersion liquid or the like.

The reason for this is as follows. Specifically, when the base heating temperature is 100°C or higher, the polymerization reaction of the metal alkoxide or the hydrolyzed polymers of the metal alkoxide contained in the coating film can be completed. Also, when the base heating temperature is 100°C or higher, water or an organic solvent serving as a solvent does not appreciably remain in the film. Thus, these solvents do not cause reduction in the visible light transmittance in the heated film.

No particular limitation is imposed on the thickness of the near-infrared absorbing layer on the transparent base in the near-infrared absorbing transparent base of the present embodiment. However, in practice, the thickness thereof is preferably 10 um or smaller and more preferably 6 um or smaller. The reason for this is as follows. When the thickness of the near-infrared absorbing layer is 10 um or smaller, the near-infrared absorbing layer exhibits sufficient pencil hardness to have abrasion resistance. In addition, it is possible to avoid occurrence of abnormalities in the stages, such as warpage of the base film and the like upon volatilization of the solvent in the near-infrared absorbing layer and curing of the binder.

### EXAMPLES

The present invention will be described below in more detail by way of examples. However, the present invention is not limited to the examples described below.
First, evaluation methods in the following examples and comparative examples will be described. (X-ray diffraction measurement)
X-ray diffraction measurement was performed through powder XRD using Cu-Kα radiation with an X 'Pert-PRO/MPD instrument of Spectris.

The measurement was performed after calibrating the diffraction angle with a standard sample (NIST640e). The obtained XRD diffraction pattern was then subjected to phase identification.

### (Optical characteristics of near-infrared absorbing particle dispersion liquid)

Visible light transmittance (VLT) and solar radiation transmittance (ST) of the near-infrared absorbing particle dispersion liquid were measured in accordance with ISO 9050 (2003) and JIS R 3106 (2019). Specifically, transmittance was measured using a spectrophotometer, U-4100, obtained from Hitachi, Ltd., and calculation was performed by being multiplied with a coefficient corresponding to the spectrum of sunlight. The measurement of transmittance was performed in a wavelength range of 300 nm or longer and 2,100 nm or shorter at 5 nm intervals. The concentration of the near-infrared absorbing particle dispersion liquid was adjusted such that the VLT was around 80%. An L*a*b* color index was obtained in the following manner. Specifically, tristimulus values X, Y, and Z with respect to a D65 standard light source and a light source angle of 10° were calculated in accordance with JIS Z 8701 (1999), and the L*a*b* color index was determined from the tristimulus values in accordance with JIS Z 8729 (2004).

### [Example 1]

A raw material mixture was prepared by weighing, mixing, and kneading cesium carbonate (Cs₂CO₃) and tungsten trioxide (WO₃) at a ratio by mole of Cs₂CO₃:WO₃=1:20 (mixing stage). That is, as shown in the column of Mixing composition of starting materials in Table 1, the ratio Cs/W by mole of cesium and tungsten in the raw material mixture is 0.1.

Next, the raw material mixture, which was the obtained kneaded material, was placed in a carbon boat, and heated at 550°C for 2 hours in a tubular furnace under a stream of a reducing gas of 3% H₂-97% Ar (reducing crystallization stage). The 3% H₂-97% Ar means a reducing gas (gas mixture) consisting of H₂ at 3% by volume and Ar as the balance.

After the reducing crystallization stage, the resulting product was gradually cooled to obtain dark blue powder A.

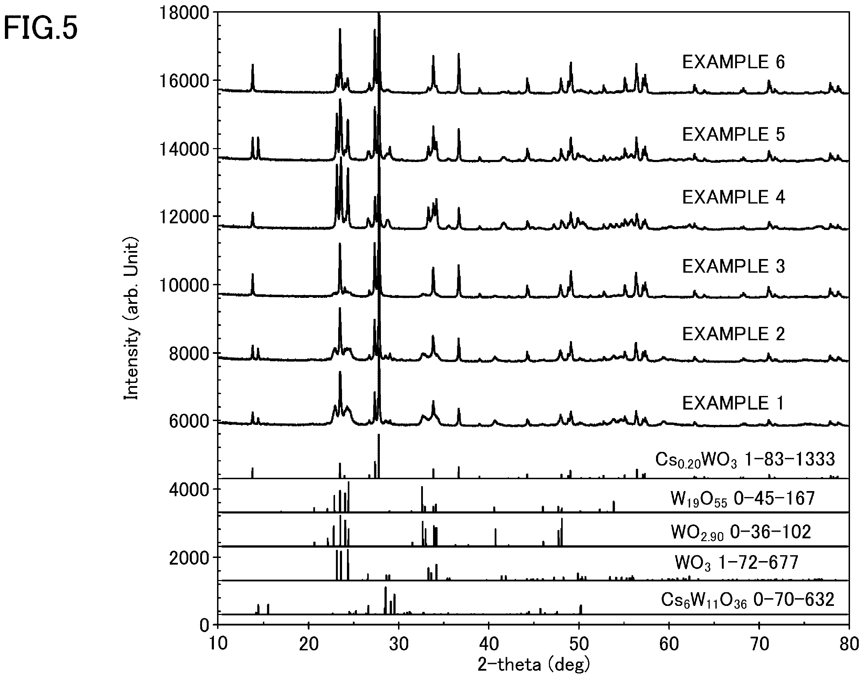

The X-ray powder diffraction pattern of the obtained powder A showed a mixed pattern including many phases, as illustrated in FIG. 5. FIG. 5 shows ICDD profiles of Cs_{0.20}WO₃, W₁₉O₅₅, WO_{2.90} (WO_{2.9}), WO₃, and Cs₆W₁₁O₃₆, which are typical phases identified in a series of examples.

As illustrated in the column of XRD-identified phases in Table 2, the phases regarded to be surely present in Example 1 were Cs_{0.20}WO₃, W₁₉O₅₅, WO_{2.9}, Cs₄W₁₁O₃₅, Cs₆W₁₁O₃₆, and CsW_{1.6}O₆ in the order from the largest quantity. At the composition Cs/W=0.1 of the raw material mixture of the starting materials, the Cs content was not sufficient to form hexagonal tungsten bronze, resulting in separation into a Cs-containing phase and a tungsten trioxide phase. Many phases were formed because the heat treatment temperature and time were insufficient for attaining equilibration. The main phases were HTB of Cs_{0.20}WO₃ and tungsten trioxide of W₁₉O₅₅, confirming that the obtained product was ITB.

As a result of compositional analysis of powder A through SEM-EDX, Cs/W=0.10 and O/W=2.80 were obtained, as illustrated in the column of SEM-EDX atomic ratio in Table 1. The O/W of less than 3 suggests that the oxygen of powder A is deficient.

As a result of TEM observation, Cs and W-containing particles and W-containing, Cs-free particles were observed. When the Cs and W-containing particles were observed at a high magnification, many band-like defects bonded at hexagonal prism planes were observed. From an atomic image, one of the band-like defects was identified as monoclinic WO₃, and the other was identified as hexagonal Cs_{0.2}WO₃. The HTB phase and the tungsten oxide phase coexisted in a band pattern in a single crystal grain, confirming that the obtained product was ITB. That is, it was confirmed that the obtained near-infrared absorbing particles contained intergrowth tungsten bronze crystals in which tungsten oxide and hexagonal tungsten bronze coexisted in a band pattern. In the following Examples 2 to 10, the obtained near-infrared absorbing particles are confirmed to contain intergrowth tungsten bronze crystals in which tungsten oxide and hexagonal tungsten bronze coexist in a band pattern.

### (Near-infrared absorbing particle dispersion liquid)

The following materials were weighed: 20% by mass of powder A, i.e., the near-infrared absorbing particles prepared in Example 1; 10% by mass of an acrylic polymer dispersant having a group containing an amine as a functional group (hereinafter abbreviated as "dispersant a"); and 70% by mass of methyl isobutyl ketone (MIBK), i.e., a liquid medium serving as a solvent. These weighed materials were placed in a glass vessel together with silica beads 0.3 mm in diameter, and dispersed and pulverized using a paint shaker for 5 hours, thereby obtaining dispersion liquid A.

The average particle diameter of the near-infrared absorbing particles in dispersion liquid A (i.e., the dispersion particle diameter measured with ELS-8000 obtained from Otsuka Electronics Co., Ltd., which is a particle size analyzer based on the dynamic light scattering method) was measured to be 33.4 nm. The above average particle diameter is shown in the column of Average particle diameter in Table 2.

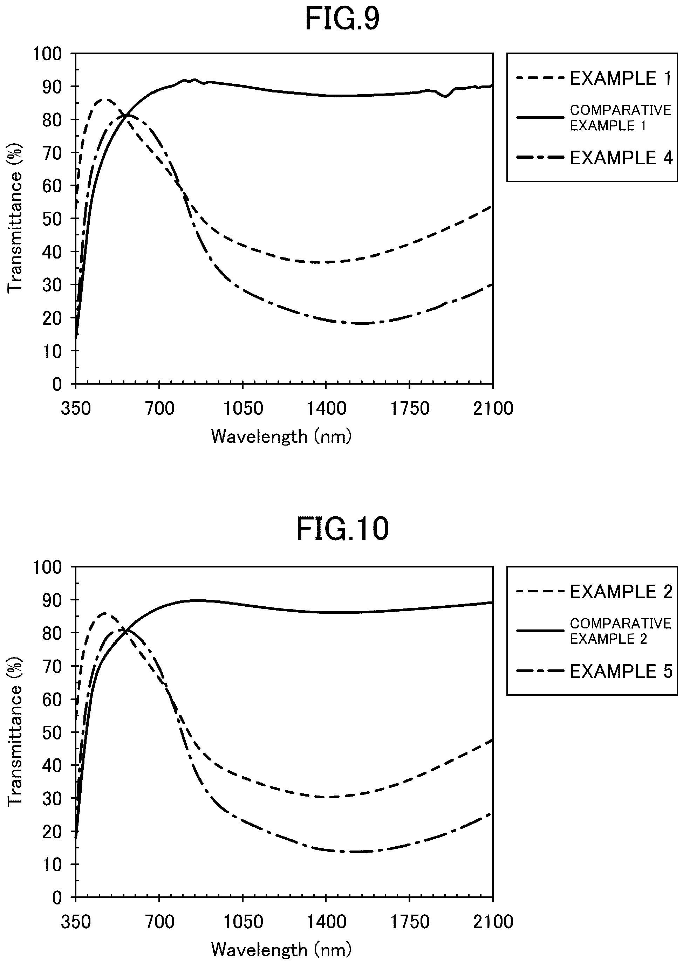

This dispersion liquid A was diluted with MIBK to a concentration of 0.05 wt% and placed in a transparent cell having an optical path length of 10 mm, followed by measuring transmittance with a U-4100 spectrophotometer of Hitachi High-Tech. A profile is illustrated in FIG. 9. The profile is that a drop due to the absorption by WO_{3-y} is observed around 600 nm, and the transmission at blue wavelengths of from 400 nm through 500 nm is highlighted.

The visible light transmittance (VLT) and the solar radiation transmittance (ST) were measured to be VLT=80.0% and ST=60.8%, indicating transparency with respect to visible light and near-infrared absorbing effect. The color index was L*=91.9, a*=-4.0 and b*=-3.6, indicating a color tone having a strong blue color. These spectral characteristics are summarized in the column of Spectral characteristics in Table 2.

### [Example 2]

Dark blue powder B was obtained in accordance with the same procedure as in Example 1 except that cesium carbonate and tungsten trioxide were weighed and mixed at a ratio by mole of 3:40 in the mixing stage.

The X-ray powder diffraction pattern of the obtained powder B showed a mixed pattern including many phases, as illustrated in FIG. 5. As illustrated in the column of XRD-identified phases in Table 2, the phases regarded to be surely present were Cs_{0.20}WO₃, W₁₉O₅₅, WO_{2.9}, Cs₄W₁₁O₃₅, Cs₆W₁₁O₃₆, and CsW_{1.6}O₆ in the order from the largest quantity.

As a result of compositional analysis of powder B through SEM-EDX, Cs/W=0.14 and O/W=2.79 were obtained. This indicates that the oxygen of powder B is deficient.

Also, a near-infrared absorbing particle dispersion liquid was prepared and evaluated in the same manner as in Example 1 except that powder B was used. The evaluation results are illustrated in Table 2 and FIG. 10.

### [Example 3]

Dark blue powder C was obtained in accordance with the same procedure as in Example 1 except that cesium carbonate and tungsten trioxide were weighed and mixed at a ratio by mole of 1:10 in the mixing stage.

The X-ray powder diffraction pattern of the obtained powder C showed a mixed pattern including many phases, as illustrated in FIG. 5. As illustrated in the column of XRD-identified phases in Table 2, the phases regarded to be surely present were Cs_{0.20}WO₃, WO_{2.9}, and Cs₄W₁₁O₃₅ in the order from the largest quantity. The pattern in which these coexisted was shown.

As a result of compositional analysis of powder C through SEM-EDX, Cs/W=0.19 and O/W=2.82 were obtained. This indicates that the oxygen of powder C is deficient.

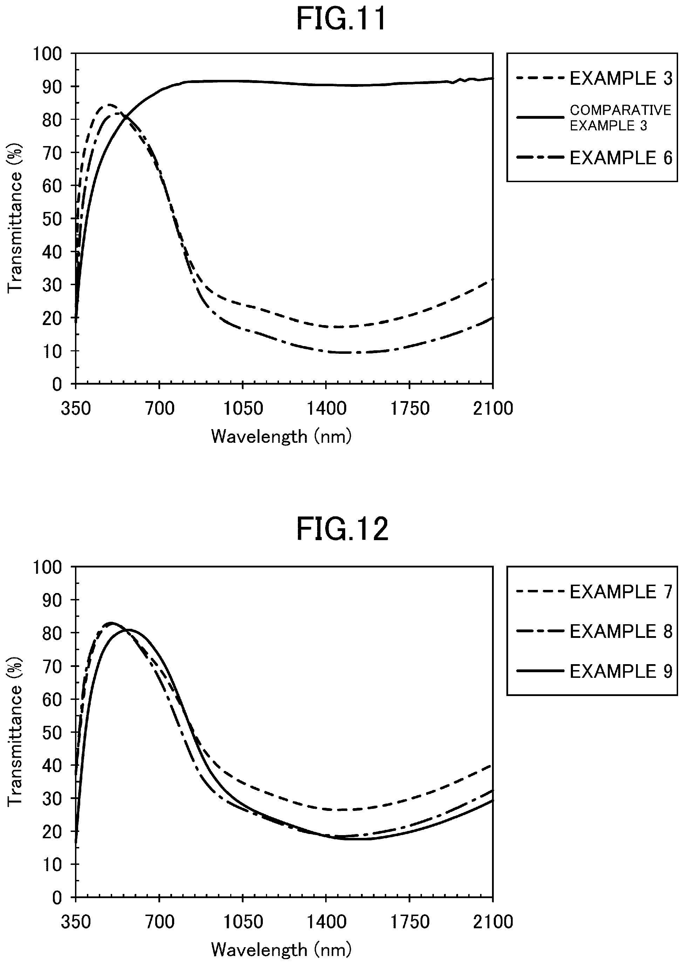

Also, a near-infrared absorbing particle dispersion liquid was prepared and evaluated in the same manner as in Example 1 except that powder C was used. The evaluation results are illustrated in Table 2 and FIG. 11.

### [Example 4]

Powder A obtained in Example 1 was spread over a carbon boat thinly and flatly, placed in a tubular furnace, and heated from room temperature to 400°C in an Ar-mixed atmosphere containing air at 25% by volume, i.e., an atmosphere of 25% Air-75% Ar (oxidation stage). The oxygen content of the atmosphere in the oxidation stage is 5.25% by volume.

After maintaining the temperature at 400°C for 10 minutes, the temperature was gradually decreased to room temperature, and powder D was removed. The color tone of the removed powder D was grayish blue.

As illustrated in FIG. 5 and Table 2, the X-ray powder diffraction pattern of the obtained powder D showed a pattern in which Cs_{0.20}WO₃, WO₃, and Cs_{0.287}W_{0.95}O₃ were mixed in the order from the largest quantity. Unlike in the cases of Examples 1 and 2, the W₁₉O₅₅ phase disappeared and the WO₃ phase appeared.

As a result of compositional analysis of powder D through SEM-EDX, Cs/W=0.10 and O/W=2.98 were obtained. This indicates that the oxygen of powder D was not appreciably deficient in the oxidation stage performed at 400°C.

As a result of TEM observation, Cs and W-containing particles and W-containing, Cs-free particles were observed. When the Cs and W-containing particles were observed at a high magnification, many band-like defects with hexagonal prism planes as bonding interfaces were observed. From an atomic image, one of them was identified as monoclinic WO₃, and the other was identified as hexagonal Cs_{0.2}WO₃. The HTB phase and the tungsten oxide phase coexisted in a band pattern in a single crystal grain, confirming that the obtained product was ITB.

Also, a near-infrared absorbing particle dispersion liquid was prepared and evaluated in the same manner as in Example 1 except that powder D was used. The evaluation results are illustrated in Table 2 and FIG. 9.

According to FIG. 9, the infrared absorbing particles produced in this example exhibit a profile balanced in terms of color in which the transmittance at blue wavelengths of from 400 nm through 500 nm is reduced and the transmittance at green to red wavelengths of from 600 nm through 700 nm is increased. This seems to be the effect by oxidation of WO_{3-y} to WO₃. The visible light transmittance (VLT) and the solar radiation transmittance (ST) were measured to be VLT=80.0% and ST=53.7%, indicating transparency with respect to visible light and near-infrared absorbing effect. The color index was L*=91.6, a*=-2.7, and b*=6.2, and b* is positive, the blue color is weak, and the color tone is close to a neutral color. The obtained film was found to have substantially no blue color.

### [Examples 5 and 6]

Powders B and C obtained in Examples 2 and 3 were subjected to an oxidation stage under the same conditions as in Example 4, thereby obtaining powders E and F. Tables 1 and 2 show the results obtained by identification through X-ray powder diffraction and the results obtained by compositional analysis through SEM-EDX. As illustrated in FIG. 5, the X-ray powder diffraction patterns of the obtained powders E and F were that WO_{3-y} disappeared and turned into WO₃. As the Cs content increased in the order of Examples 4, 5, and 6, the relative quantity of WO₃ decreased, and Cs oxides other than Cs_{0.2}WO₃ decreased. In Example 6, Cs_{0.2}WO₃ and WO₃ only were obtained.

Also, near-infrared absorbing particle dispersion liquids were prepared and evaluated in the same manner as in Example 1 except that powders E and F were used. The evaluation results are illustrated in Table 2 and FIGS. 10 and 11.

### [Examples 7 to 10]

Under the conditions of the oxidation stage illustrated in Table 1, powder A obtained in Example 1 was oxidized in Examples 7, 9, and 10 and powder B obtained in Example 2 was oxidized in Example 8, thereby obtaining powders G to J. Tables 1 and 2 show the results obtained by identification through X-ray powder diffraction and the results obtained by compositional analysis through SEM-EDX.

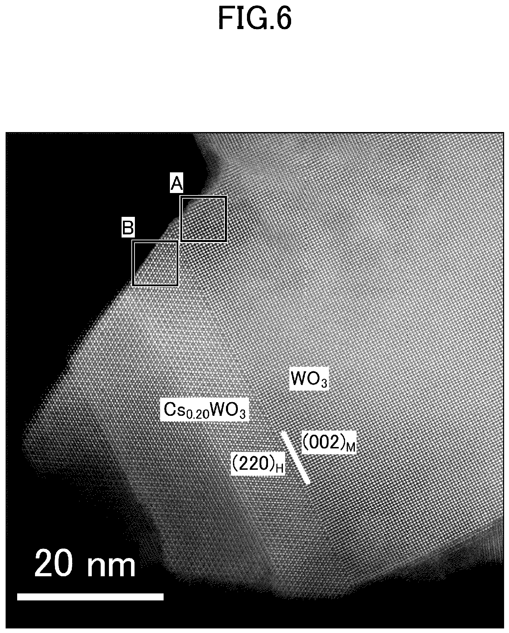

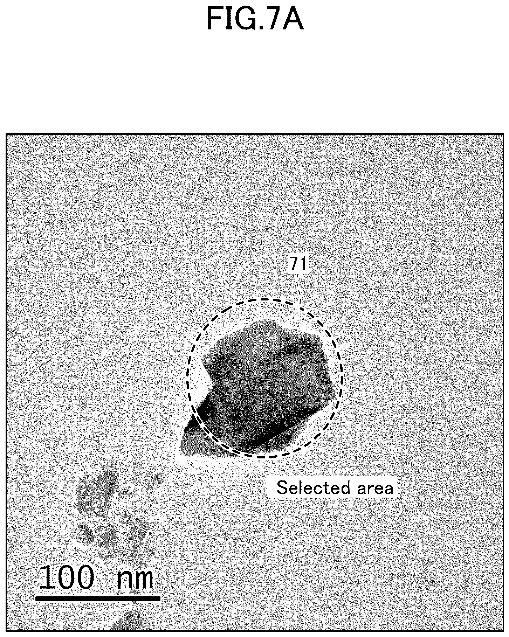

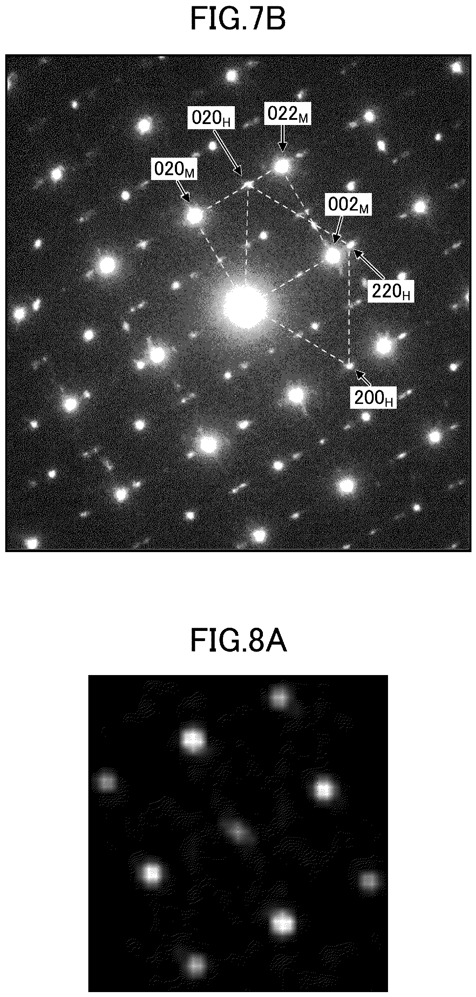

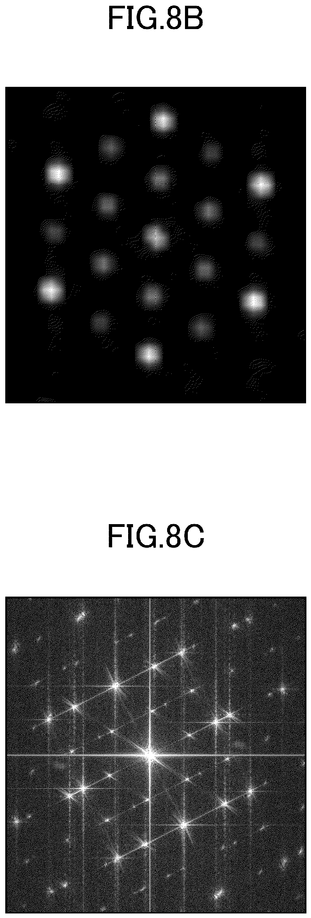

An atomic image of powder I obtained in Example 9 was observed in the HAADF (high-angle annular dark field) mode of STEM. As illustrated in FIG. 6, ITB was observed in this sample in which two phases separated by a clear linear boundary coexisted in a single particle. A selected area electron diffraction image taken from a region 71 in FIG. 7A is illustrated in FIG. 7B. According to FIG. 7B, it was analyzed as an overlap of a monoclinic [100]_{M} zone axis pattern and a hexagonal [001]_{H} zone axis pattern. Through fast Fourier transform of the atomic images of regions A and B in FIG. 6, the patterns illustrated in FIGS. 8A and 8B were obtained. FIGS. 8A and 8B illustrate the [100]_{M} and [001]_{H} zone axis patterns. Therefore, it was confirmed that the regions A and B were pure monoclinic WO₃ and pure hexagonal Cs_{0.20}WO₃. FIG. 8C was obtained through fast Fourier transform of the atomic image of a wide region extending over both of the above crystals. This image is confirmed to be the same diffraction image as the selected area electron diffraction image obtained from the whole particle. Moreover, from the diffraction image showing the overlap of both of the zone axis patterns, the bonded plane of both of the crystals was found to be (220)_{H}//(002)_{M}.

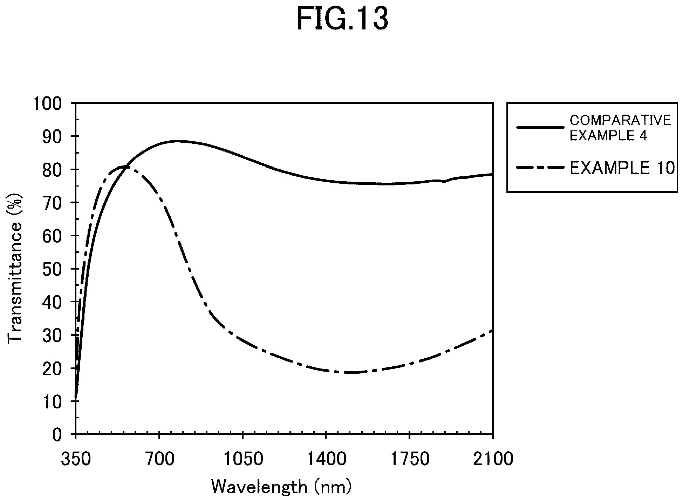

Also, a near-infrared absorbing particle dispersion liquid was prepared and evaluated in the same manner as in Example 1 except that powders G and K were used. The evaluation results are illustrated in Table 2 and FIGS. 12 and 13.

### [Comparative Example 1]

Powder A obtained in Example 1 was spread over a carbon boat thinly and flatly, placed in a tubular furnace, and heated in air from room temperature to 600°C (oxidation stage). After maintaining the temperature at 600°C for 1 hour, the temperature was gradually decreased to room temperature, thereby removing powder i. The color tone of the removed powder i was yellow.

The X-ray powder diffraction pattern of the obtained powder i showed a mixed pattern representing coexistence of Cs_{0.20}WO₃ and WO₃.

As a result of compositional analysis of powder i through SEM-EDX, Cs/W=0.10 and O/W=3.00 were obtained. This indicates that the oxygen of powder i was not deficient in the oxidation stage performed at 600°C.

Also, a near-infrared absorbing particle dispersion liquid was prepared and evaluated in the same manner as in Example 1 except that powder i was used. The evaluation results are illustrated in Table 2 and FIG. 9. The obtained optical characteristics of dispersion liquid i were VLT=80.1% and ST=83.1%, indicating substantially no effect of absorbing infrared rays.

### [Comparative Example 2]

Powder B obtained in Example 2 was spread over a carbon boat thinly and flatly, placed in a tubular furnace, and heated in air from room temperature to 600°C (oxidation stage). After maintaining the temperature at 600°C for 30 minutes, the temperature was gradually decreased to room temperature, thereby removing powder ii. The color tone of the removed powder ii was yellow. The X-ray powder diffraction pattern of the obtained powder ii showed a mixed pattern representing coexistence of Cs_{0.20}WO₃ and WO₃.

As a result of compositional analysis of powder ii through SEM-EDX, Cs/W=0.15 and O/W=3.00 were obtained. This indicates that the oxygen of powder ii was not deficient in the oxidation stage performed at 600°C.

Also, a near-infrared absorbing particle dispersion liquid was prepared and evaluated in the same manner as in Example 1 except that powder ii was used. The evaluation results are illustrated in Table 2 and FIG. 10.

### [Comparative Example 3]

Powder C obtained in Example 3 was spread over a carbon boat thinly and flatly, placed in a tubular furnace, and heated in air from room temperature to 550°C, and the temperature was maintained at 550°C for 30 minutes (oxidation stage). Subsequently, the temperature was gradually decreased to room temperature, thereby removing powder iii. The color tone of the removed powder iii was yellow.

The X-ray powder diffraction pattern of the obtained powder iii showed a mixed pattern representing coexistence of Cs_{0.20}WO₃ and WO₃.

As a result of compositional analysis of powder iii through SEM-EDX, Cs/W=0.19 and O/W=3.00 were obtained. This indicates that the oxygen of powder iii was not deficient in the oxidation stage performed at 550°C.

Also, a near-infrared absorbing particle dispersion liquid was prepared and evaluated in the same manner as in Example 1 except that powder iii was used. The evaluation results are illustrated in Table 2 and FIG. 11.

### [Comparative Example 4]

Powder A obtained in Example 1 was spread over a carbon boat thinly and flatly, placed in a tubular furnace, and heated in an Ar-mixed atmosphere containing air in 25% by volume from room temperature to 600°C, and the temperature was maintained at 600°C for 10 minutes (oxidation stage). Subsequently, the temperature was gradually decreased to room temperature, thereby removing powder iv. The color tone of the removed powder iv was yellow.

The X-ray powder diffraction pattern of the obtained powder iv showed a mixed pattern representing coexistence of Cs_{0.20}WO₃ and WO₃.

As a result of compositional analysis of powder iv through SEM-EDX, Cs/W=0.10 and O/W=3.00 were obtained. This indicates that the oxygen of powder iv was not deficient in the oxidation stage performed at 600°C.

Also, a near-infrared absorbing particle dispersion liquid was prepared and evaluated in the same manner as in Example 1 except that powder iv was used. The evaluation results are illustrated in Table 2 and FIG. 13.

**[Table 1]**

| | Mixing composition of starting materials (atomic ratio) | | | Reducing crystallization stage | | Oxidation stage | | Powder | SEM-EDX atomic ratio | |
|---|---|---|---|---|---|---|---|---|---|---|
| | Cs | W | O | Temperature °C/ Time hr | Stream | Temperature °C/ Time min | Atmosphere | | Cs/W | O/W |
| Example 1 | 1 | 10 | 30 | 550/2 | 3%H₂-97%Ar | None | None | A | 0.10 | 2.80 |
| Example 2 | 1.5 | 10 | 30 | 550/2 | 3%H₂-97%Ar | None | None | B | 0.14 | 2.79 |
| Example 3 | 2 | 10 | 30 | 550/2 | 3%H₂-97%Ar | None | None | C | 0.19 | 2.82 |
| Example 4 | 1 | 10 | 30 | 550/2 | 3%H₂-97%Ar | 400/10 | 25%Air-75%Ar | D | 0.10 | 2.98 |
| Example 5 | 1.5 | 10 | 30 | 550/2 | 3%H₂-97%Ar | 400/10 | 25%Air-75%Ar | E | 0.14 | 2,97 |
| Example 6 | 2 | 10 | 30 | 550/2 | 3%H₂-97%Ar | 400/10 | 25%Air-75%Ar | F | 0.19 | 2.94 |
| Example 7 | 1 | 10 | 30 | 550/2 | 3%H₂-97%Ar | 350/30 | 25%Air-75%Ar | G | 0.10 | 2.87 |
| Example 8 | 1.5 | 10 | 30 | 550/2 | 3%H₂-97%Ar | 350/30 | 25%Air-75%Ar | H | 0.14 | 2.85 |
| Example 9 | 1 | 10 | 30 | 550/2 | 3%H₂-97%Ar | 400/20 | 25%Air-75%Ar | I | 0.09 | 2.97 |
| Example 10 | 1 | 10 | 30 | 550/2 | 3%H₂-97%Ar | 375/30 | 25%Air-75%Ar | J | 0.10 | 2.89 |
| Comparative Example 1 | 1 | 10 | 30 | 550/2 | 3%H₂-97%Ar | 600/60 | 100%Air | i | 0.10 | 3.00 |
| Comparative Example 2 | 1.5 | 10 | 30 | 550/2 | 3%H₂-97%Ar | 600/30 | 100%Air | ii | 0.15 | 3.00 |
| Comparative Example 3 | 2 | 10 | 30 | 550/2 | 3%H₂-97%Ar | 550/30 | 100%Air | iii | 0.19 | 3.00 |
| Comparative Example 4 | 1 | 10 | 30 | 550/2 | 3%H₂-97%Ar | 600/10 | 25%Air-75%Ar | iv | 0.10 | 3.00 |

**[Table 2]**

| | XRD-identified phases | Average particle diameter (nm) | Spectral characteristics | | | | |
|---|---|---|---|---|---|---|---|
| | | | L* | a* | b* | VLT (%) | ST (%) |
| Example 1 | Cs_{0.20}WO₃, W₁₉O₅₅, WO_{2.9}, Cs₄W₁₁O₃₅, Cs₆W₁₁O₃₆, CsW_{1.6}O₆ | 33.4 | 91.9 | -4.0 | -3.6 | 80.0 | 60.8 |
| Example 2 | Cs_{0.20}WO₃, W₁₉O₅₅, WO_{2.9}, Cs₄W₁₁O₃₅, Cs₆W₁₁O₃₆, CsW_{1.6}O₆ | 35.3 | 91.9 | -4.0 | -3.3 | 80.0 | 57.9 |
| Example 3 | Cs_{0.20}WO₃, WO_{2.9}, Cs₄W₁₁O₃₅ | 33.7 | 91.8 | -4.2 | -1.8 | 80.1 | 50.8 |
| Example 4 | Cs_{0.20}WO₃, WO₃. Cs_{0.287}W_{0.95}O₃ | 28.6 | 91.6 | -2.7 | 6.2 | 80.0 | 53.7 |
| Example 5 | Cs_{0.20}WO₃, WO₃, CsW_{1.6}O₆. Cs₆W₁₁O₃₆ | 30.1 | 91.6 | -3.1 | 5.0 | 80.0 | 50.7 |
| Example 6 | Cs_{0.20} WO₃, WO₃ | 29.4 | 91.7 | -3.9 | 2.6 | 80.0 | 49.1 |
| Example 7 | Cs_{0.20}WO₃, WO₃, Cs₆W₁₁O₃₆ | 26.8 | 91.7 | -3.7 | 0.5 | 80.0 | 56.8 |
| Example 8 | Cs_{0.20}WO₃, WO₃, CsW_{1.6}O₆, Cs₆W₁₁O₃₆ | 29.2 | 91.8 | -4.0 | 0.0 | 80.0 | 52.5 |
| Example 9 | Cs_{0**.**20}WO₃, WO₃ | 36.0 | 91.6 | -2.6 | 6.2 | 80.0 | 53.6 |
| Example 10 | Cs_{0.20}WO₃, WO₃, Cs₆W₁₁O₃₆ | 31.1 | 91.6 | -2.9 | 5.0 | 80.0 | 53.8 |
| Comparative Example 1 | Cs_{0.20}WO₃, WO₃ | 35.2 | 91.4 | 0.2 | 11.9 | 80.1 | 83.1 |
| Comparative Example 2 | Cs_{0.20}WO₃, WO₃ | 33.5 | 91.4 | 0.2 | 11.8 | 80.1 | 83.9 |
| Comparative Example 3 | Cs_{0.20}WO₃, WO₃ | 30.7 | 91.4 | 0.4 | 10.7 | 80.1 | 84.2 |
| Comparative Example 4 | Cs_{0.20}WO₃, WO₃ | 28.8 | 91.4 | 0.0 | 11.5 | 80.0 | 79.7 |

The present application claims priority to Japanese Patent Application No. 2022-010415 filed with the Japan Patent Office on January 26, 2022, and the entire contents of Japanese Patent Application No. 2022-010415 are incorporated herein by reference.

### REFERENCE SIGNS LIST

- 10: Near-infrared absorbing particle dispersion liquid
- 11,21: Near-infrared absorbing particles
- 12: Liquid medium
- 20,31: Near-infrared absorbing particle dispersion
- 22: Solid medium
- 30: Near-infrared absorbing stack
- 321,322,41: Transparent base
- 40: Near-infrared absorbing transparent base
- 41A: One surface
- 42: Near-infrared absorbing layer

## Claims

1. Near-infrared absorbing particles, comprising:
intergrowth tungsten bronze crystals in which tungsten oxide and hexagonal tungsten bronze coexist in a band pattern, wherein
a Cs/W ratio by mole of cesium (Cs) and tungsten (W) contained in the near-infrared absorbing particles is 0.01 or more and less than 0.20, and
an O/W ratio by mole of oxygen (O) and tungsten (W) contained in the near-infrared absorbing particles is 2.6 or more and less than 2.99.

2. The near-infrared absorbing particles according to claim 1, wherein
one or more selected from the tungsten oxide and the hexagonal tungsten bronze have an oxygen deficiency.

3. The near-infrared absorbing particles according to claim 1 or 2, wherein
the tungsten oxide is tungsten trioxide (WO₃).

4. The near-infrared absorbing particles according to any one of claims 1 to 3, wherein
a part of cesium contained in the hexagonal tungsten bronze is substituted with an additive element, and
the additive element is one or more selected from Na, Tl, In, Li, Be, Mg, Ca, Sr, Ba, Al, and Ga.

5. The near-infrared absorbing particles according to any one of claims 1 to 4, wherein
an average particle diameter of the near-infrared absorbing particles is 0.1 nm or more and 200 nm or less.

6. The near-infrared absorbing particles according to any one of claims 1 to 5, wherein
surfaces of the near-infrared absorbing particles are modified with a compound containing one or more atoms selected from Si, Ti, Zr, and Al.

7. A production method for the near-infrared absorbing particles of any one of claims 1 to 6, the production method comprising:
a mixing stage of mixing a cesium-containing compound and a tungsten-containing compound, thereby preparing a raw material mixture; and
a reducing crystallization stage of heating and crystallizing the raw material mixture in a reducing gas atmosphere at 350°C or higher and 950°C or lower, wherein
in the mixing stage, the raw material mixture is prepared such that a Cs/W ratio by mole of cesium (Cs) and tungsten (W) contained in the raw material mixture is 0.01 or more and 0.20 or less.

8. The production method according to claim 7, further comprising:
an oxidation stage of heating powder obtained in the reducing crystallization stage at 300°C or higher and 550°C or lower in a low-oxygen-concentration atmosphere.

9. A near-infrared absorbing particle dispersion liquid, comprising:
the near-infrared absorbing particles of any one of claims 1 to 6; and
a liquid medium that is one or more selected from water, an organic solvent, fats and oils, a liquid resin, and a liquid plasticizer.

10. The near-infrared absorbing particle dispersion liquid according to claim 9, wherein
a content of the near-infrared absorbing particles in the near-infrared absorbing particle dispersion liquid is 0.01% by mass or more and 80% by mass or less.

11. A near-infrared absorbing particle dispersion, comprising:
the near-infrared absorbing particles of any one of claims 1 to 6; and
a solid medium.

12. The near-infrared absorbing particle dispersion according to claim 11, wherein
the solid medium is a resin.

13. The near-infrared absorbing particle dispersion according to claim 12, wherein
the resin is
one resin selected from a resin group consisting of a polyester resin, a polycarbonate resin, an acrylic resin, a styrene resin, a polyamide resin, a polyethylene resin, a vinyl chloride resin, an olefin resin, an epoxy resin, a polyimide resin, a fluororesin, an ethylene-vinyl acetate copolymer, a polyvinyl acetal resin, and an ultraviolet curable resin, or
a mixture of two or more resins selected from the resin group.

14. The near-infrared absorbing particle dispersion according to any one of claims 11 to 13, wherein
the near-infrared absorbing particle dispersion has a sheet shape, a board shape, or a film shape.

15. The near-infrared absorbing particle dispersion according to any one of claims 11 to 14, wherein
in a cross section of L*=92±1 of a Hunter color index, the near-infrared absorbing particle dispersion satisfies a solar radiation transmittance of 65% or lower and b*≥1.6×a*+8.0.

16. A near-infrared absorbing stack, comprising:
the near-infrared absorbing particle dispersion of any one of claims 11 to 15; and
a transparent base,
the near-infrared absorbing particle dispersion and the transparent base forming a stacked structure.

17. A near-infrared absorbing transparent base, comprising:
a transparent base; and
a near-infrared absorbing layer disposed on at least one surface of the transparent base, wherein
the near-infrared absorbing layer is the near-infrared absorbing particle dispersion of any one of claims 11 to 15.
